# EUROPÄISCHE PATENTSCHRIFT

(11) **EP 0 542 214 B1**
(45) Veröffentlichungstag und Bekanntmachung des Hinweises auf die Patenterteilung: **25.05.1994**
(21) Anmeldenummer: 92119264.7
(22) Anmeldetag: 11.11.1992
(51) Int. Cl.: C09B 62/503, C09B 62/04

(54) **Wasserlösliche faserreaktive Farbstoffe, Verfahren zu ihrer Herstellung und ihre Verwendung**
Water-soluble fibre-reactive dyes, process for their preparation and the use thereof
Colorants réactifs avec les fibres et solubles dans l'eau, procédé pour leur préparation et leur utilisation

(30) Priorität: 14.11.1991 DE 4137464
(43) Veröffentlichungstag der Anmeldung: 19.05.1993
(73) Patentinhaber: HOECHST AKTIENGESELLSCHAFT, 65926 Frankfurt am Main (DE)
(72) Erfinder: Dannheim, Jörg, Dr., W-6000 Frankfurt am Main 90 (DE); Russ, Werner Hubert, Dr., W-6093 Flörsheim am Main (DE)

(56) Entgegenhaltungen:
- WO-A-90/13604

## Beschreibung

Aus den PCT-Patentanmeldungs-Veröffentlichungen Nrs. WO 90/13603 und WO 90/13604 sind faserreaktive Farbstoffe bekannt, die eine faserreaktive Gruppe der Vinylsulfonreihe und des weiteren einen durch eine Cyanamidogruppe substituierten s-Triazinylamino-Rest besitzen.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen faserreaktiven Farbstoffen, die verbesserte Eigenschaften, insbesondere in anwendungstechnischer Sicht, aufweisen. Desweiteren werden in zunehmendem Maße Farbstoffe verlangt, die in hoher Qualität weiß ätzbar sind und sich somit sehr gut sowohl für den Ätzdruck als auch für den Reservedruck eignen.

Mit der vorliegenden Erfindung wurden nunmehr neue, wertvolle faserreaktive Farbstoffe der nachstehend angegebenen und definierten allgemeinen Formel (1) gefunden, die sehr gute anwendungstechnische Eigenschaften besitzen und sich darüber hinaus auch sehr gut für den Ätz- und Reservedruck eignen, weswegen sie sich in breiterem Anwendungsumfang zum Färben von Fasermaterialien einsetzen lassen. Beim Ätzdruck wird auf eine gefärbte Stoffbahn (Fond) in einem gewünschten Muster ein Ätzmittel aufgedruckt; das Ätzmittel zerstört den Farbstoff, sofern dieser ätzbar ist, so daß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorgangs und üblicher Behandlung zur Fixierung dieses beigegebenen Farbstoffes auf dem Fond ein Druckmuster in einem anderen Farbton (Buntätze). Bei dem Reservedruck wird zunächst das Gewebe mit einem geeigneten Reservierungsmittel in einem gewünschten Muster bedruckt. Das so vorbedruckte Gewebe wird anschließend mit einem Farbstoff, der sich mit dem Reservierungsmittel zu verbinden vermag und somit nicht mehr in der Lage ist, auf dem Gewebe zu fixieren, überfärbt (überklotzt oder überdruckt) mit der Folge, daß an den reservierten Stellen keine Farbstoffixierung eintritt und somit die erhaltene Färbung ein weißes Muster gemäß dem Muster des Reservierungsmittels besitzt.

Die neuen, erfindungsgemäßen Farbstoffe besitzen die allgemeinen Formel (1) 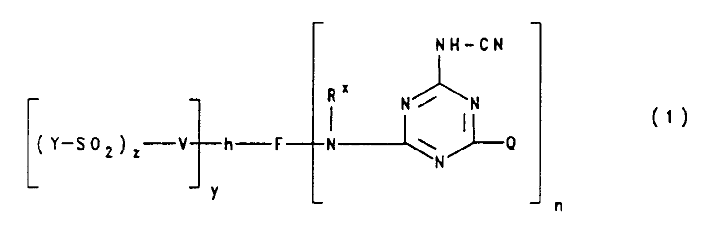
in welcher bedeuten:
- F: ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;
- R^{x}: ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;
- n: ist die Zahl 1 oder 2, bevorzugt 1;
- Q: ist eine Gruppe der allgemeinen Formel (2)

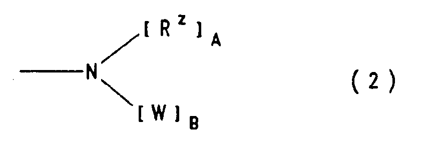

in welcher
- R^{z}: ein Wasserstoffatom oder eine Alkylgruppe von 1 bis 4 C-Atomen, wie insbesondere die Methyl- oder Ethylgruppe, ist, die durch Halogen, wie Chlor und Brom, Hydroxy, Cyano, Alkoxy von 1 bis 4 C-Atomen, wie Methoxy und Ethoxy, Carboxy, Sulfamoyl, Sulfo oder Sulfato oder durch einen gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierten Phenylrest substituiert sein kann, oder ein Cyclohexylrest oder ein gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierter Phenylrest ist,
- W: ein durch 1 bis 4, bevorzugt 1 oder 2, wasserlöslich-machende Substituenten substituierter Aryl-, Alkylen-aryl-, Arylen-alkyl-, Alkylen-arylen-alkyl- oder Arylen-alkylen-aryl-Rest ist, wobei die Alkylenreste bzw. Alkylreste solche von 1 bis 8, vorzugsweise von 2 bis 6, insbesondere von 2 bis 4 C-Atomen sind und noch durch andere Substituenten substituiert sein können und die Arylenreste bzw. Arylreste gegebenenfalls noch durch andere Substituenten substituierte Phenylen- oder Naphthylenreste bzw. Phenyl- oder Naphthylreste sind, und wobei die Alkylenreste durch 1 oder mehrere, wie 2 oder 3, Heterogruppen, wie -NH-, -N(R)- mit R gleich Alkyl von 1 bis 4 C-Atomen, das durch Sulfo, Carboxy, Sulfato, Phenyl oder Sulfophenyl substituiert sein kann, -O-, -S-, -SO₂-, -CO-, -SO₂-NH-, -NH-SO₂-, -NH-CO- und -CO-NH-, unterbrochen sein können und die Alkylen- und Arylenanteile bzw. Alkyl- und Arylanteile in den kombinierten Alkyl(en)/Aryl(en)-Resten jeweils durch eine solche Gruppe voneinander getrennt sein können,
A die Zahl Null oder 1 bedeutet und
B die Zahl 1 oder 2 bedeutet, wobei die Summe von (A + B) gleich der Zahl 2 ist und wobei im Falle von B gleich 2 die Gruppen der Formel -W-(SO₂-Y)_{z} zueinander die gleich Bedeutung oder eine voneinander verschiedene Bedeutung haben können;
- V: ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder eine durch eine der nachstehenden Heterogruppen unterbrochener Arylen-arylen-Rest, wobei die Alkylenreste solche von 1 bis 8, vorzugsweise von 2 bis 6, insbesondere von 2 bis 4 C-Atomen sind und substituiert sein können, beispielsweise durch Sulfo, Carboxy, Sulfato und/oder Phosphato, und die Arylenreste gegebenenfalls substituierte Phenylen- oder Naphthylenreste sind, und wobei die Alkylenreste durch 1 oder mehrere, wie 2 oder 3, Heterogruppen, wie -NH-, -N(R)- mit R gleich Alkyl von 1 bis 4 C-Atomen, das durch Sulfo, Carboxy, Sulfato, Phenyl oder Sulfophenyl substituiert sein kann, -O-, -S-, -SO₂-, -CO-, -SO₂-NH-, -NH-SO₂-, -NH-CO- und -CO-NH-, unterbrochen sein können und die Alkylen- und Arylenanteile in den kombinierten Alkylen/Arylen-Resten jeweils durch eine solche Heterogruppe voneinander getrennt sein können;
- y: ist die Zahl 1 oder 2;
- z: ist die Zahl 1 oder 2;
- h: ist im Falle von y gleich 2 ein H-Atom oder im Falle von y gleich 1 eine Gruppe der Formel -NH-, -N(R)- mit R einer der obengenannten Bedeutungen, -NH-CO-NH-, -NH-CO- oder -CO-NH- oder bevorzugt eine direkte Bindung;
- Y: ist die Vinylgruppe oder ist eine Ethylgruppe, die in β-Stellung einen alkalisch eliminierbaren Substituenten enthält, wie die β-Sulfatoethyl-, β-Thiosulfatoethyl- oder β-Phosphatoethyl-Gruppe oder eine β-Alkanoyloxyethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl oder die β-(p-Toluolsufonyloxy)-ethyl-Gruppe oder eine β-Halogenethyl-Gruppe, wie die β-Bromethyl- oder β-Chlorethyl-Gruppe, und ist bevorzugt die Vinylgruppe und insbesondere die β-Sulfatoethyl-Gruppe,
wobei die Gruppe(n) -SO₂-Y über einen Alkylenrest von 1 bis 4 C-Atomen, wie die Methylengruppe, oder über eine Alkylaminogruppe von 1 bis 4 C-Atomen, wie die Methylamino- oder Ethylaminogruppe, an ein aromatisches Kohlenstoffatom von F oder V gebunden sein kann (können).

Bevorzugt ist F der Rest eines Mono- oder Disazofarbstoffes oder der Rest eines Metallkomplex-Azofarbstoffes, wie eines o,o′-1:1-Kupferkomplex-Monoazo- oder -Disazofarbstoffes, oder eines Triphendioxazin-, eines Anthrachinon- oder eines Phthalocyaninfarbstoffes, wie eines Kupferphthalocyaninfarbstoffes.

Der Rest F kann in seinem Grundgerüst die bei organischen Farbstoffen üblichen Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Sulfo, Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl ausgewählt sind.

Wasserlöslich-machende Gruppen in dem Rest W sind beispielsweise die Carboxy-, Sulfo-, Sulfato-, Phosphato-, Phosphono- und Phosphinogruppe.

In allen obigen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato", "Phosphono", "Phosphino", "Thiosulfato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Phosphatogruppen Gruppen entsprechend der allgemeinen Formel -OPO₃M₂, Phosphonogruppen Gruppen entsprechend der allgemeinen Formel -OPO₂M₂, Phosphinogruppen Gruppen entsprechend der allgemeinen Formel -PO₂M₂, Thiosulfatogruppen Gruppen entsprechend der allgemeinen Formel -S-SO₃M und Sulfatogruppen Gruppen entsprechend der allgemeinen Formel -OSO₃M,
in welchen
- M: ein Wasserstoffatom oder eine salzbildendes Metallatom, wie ein Alkalimetall, wie Natrium, Kalium oder Lithium, ist.

Formelreste R^{x} sind beispielsweise: Wasserstoff, Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl, Amidosulfonylmethyl und β-Sulfatoethyl.

Formelreste R^{z} sind beispielsweise: Wasserstoff, Methyl, Ethyl, Carboxymethyl, Carbomethoxymethyl, Carbethoxymethyl, Sulfomethyl, Sulfamidomethyl, β-Carboxyethyl, β-Sulfatoethyl, n-Propyl, β-Carboxypropyl, β-Sulfatoethyl, β-Ethoxyethyl, β-Methoxypropyl, γ-Chlorpropyl, γ-Brompropyl, n-Butyl, Isobutyl, Cyclohexyl, Phenyl, 2-Chlorphenyl, 3-Chlorphenyl, 4-Chlorphenyl, 2- oder 3- oder 4-Sulfophenyl, 2-Methyl-phenyl, 4-Methoxy-phenyl, 3-Methyl-phenyl und 4-Ethyl-phenyl. Hiervon bevorzugt sind die gegebenenfalls substituierten Alkylgruppen und insbesondere bevorzugt die Methyl- und die Ethylgruppe und das Wasserstoffatom.

In den Resten V und W sind Arylenreste bzw. Arylreste bevorzugt Phenylen- und Naphthylenreste bzw. Phenyl- und Naphthylreste, die einen oder mehrere, wie 2 oder 3, bevorzugt 1 oder 2, Substituenten enthatten können, die beispielsweise der Gruppe der Substituenten Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Sulfamoyl, Trifluormethyl und Alkoxycarbonyl von 2 bis 5 C-Atomen, wie Methoxycarbonyl und Ethoxycarbonyl, und erforderlichenfalls der Gruppe der wasserlöslich-machenden Substituenten angehören. Bevorzugt ist hiervon W ein Phenylen- bzw. Phenylrest, die durch die oben angegebenen Substituenten substituiert sein können, wobei die Substituenten aus der Gruppe Alkyl von 1 bis 4 C-Atomen, Chlor, Alkoxy von 1 bis 4 C-Atomen, Carboxy und Sulfo bevorzugt sind.

Alkyl- bzw. Alkylenreste im Rest W sind bevorzugt geradkettige und verzweigte Alkyl- bzw. Alkylengruppen von 2 bis 6 C-Atomen, die durch die angegebenen Heterogruppen, wie 1 oder 2 dieser Heterogruppen, unterbrochen und erforderlichenfalls durch eine oder mehrere wasserlöslich-machende Gruppen substituiert sein können. Bevorzugt hiervon sind geradkettige Alkyl- bzw. Alkylengruppen von 2 bis 4 C-Atomen oder eine durch ein Sauerstoffatom oder eine Amino- oder Methylamino-Gruppe unterbrochene Alkyl- bzw. Alkylengruppe von 4 C-Atomen. Insbesondere bevorzugte Alkylreste sind die durch Sulfo, Carboxy, Sulfato oder Phosphato substituierten Ethyl- oder n-Propyl-Gruppen. Substituenten in den Alkylengruppen von W können beispielsweise Sulfo-, Carboxy-, Hydroxy- und Cyanogruppen sein.

Ist der Formelrest W ein Alkylen-aryl- oder ein Alkylen-arylen-alkyl-Rest, so ist in diesen Gruppen der Alkyl- bzw. Alkylenrest bevorzugt ein geradkettiger Rest von 1 bis 3 C-Atomen und der Arylenrest bevorzugt ein 1,3- oder insbesondere 1,4-Phenylenrest, die erforderlichenfalls durch eine oder mehrere wasserlöslichmachende Gruppen substituiert sind. Alkylen-arylen-Reste und Alkylen-aryl-Reste sind insbesondere die Reste der Formeln -CH₂-CH₂-phenylen- und -CH₂-phenylen- bzw. die im Phenylrest durch Sulfo und/oder Carboxy substituierten Phenethyl- und Benzylgruppen.

Reste der allgemeinen Formel (2) sind beispielsweise: 2-Sulfo-phenylamino, 3-Sulfo-phenylamino, 4-Sulfo-phenylamino, 2-Carboxy-phenylamino, 3-Carboxy-phenylamino, 4-Carboxy-phenylamino, 3,5-Disulfo-phenylamino, 2-Methyl-5-sulfo-phenylamino, 2-Methyl-4-sulfo-phenylamino, 2,4-Disulfo-phenylamino, 2-Methyl-4,6-disulfo-phenylamino, 2-Methyl-3,5-disulfo-phenylamino, 1-Methyl-2,5-disulfo-phenylamino, 3,4-Dicarboxy-phenylamino, 2,5-Dicarboxy-phenylamino, 3,5-Dicarboxy-phenylamino, 2-Hydroxy-3-carboxy-phenylamino, β-Carboxy-ethylamino-, δ-Carboxy-butylamino, 1-Carboxy-2-methyl-n-propyl-1-amino, 1-Carboxy-3-methyl-n-butyl-1-amino, 1-Carboxy-ethyl-1-amino, 2-Sulfo-ethyl-1-amino, 3-Phosphono-phenylamino, 3-Phosphino-phenylamino und 4-Phosphono-phenylamino.

Der Formelrest V ist bevorzugt eine direkte Bindung. Ist V ein Arylenrest, so ist er bevorzugt ein gegebenenfalls sulfosubstituierter Naphthylenrest oder ein Phenylenrest, der durch 1 oder 2 Substituenten aus der Gruppe Alkyl von 1 bis 4 C-Atomen, Alkoxy von 1 bis 4 C-Atomen, Halogen, wie Chlor und Brom, Alkylsulfonyl von 1 bis 4 C-Atomen, Sulfo, Carboxy und Trifluormethyl substituiert sein kann.

Ist V ein Alkylenrest, so ist dieser bevorzugt ein Alkylenrest von 2 bis 6 C-Atomen, der gegebenenfalls durch eine oder mehrere der obengenannten Heterogruppen unterbrochen und durch einen oder mehrere der genannten Substituenten substituiert sein kann.

Bevorzugte Reste -V-h- sind: 1,4-Phenylen, 1,3-Phenylen, 1,4-Phenylen-amino, 1,3-Phenylen-amino, 2-Methyl-5-methoxy-1,4-phenylen-4-amino, 4-Chlor-1,3-phenylen-3-amino, 4-Hydroxy-1,3-phenylen-3-amino, 4-Methoxy-1,3-phenylen-3-amino, 2,5-Dimethoxy-1,4-phenylen-4-amino, 4-Carboxy-1,3-phenylen-3-amino und Reste der Formeln 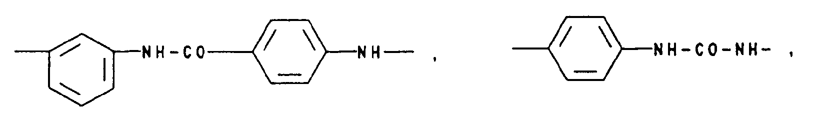 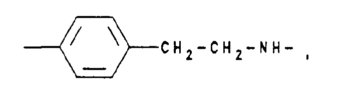
-(CH₂)₃-NH- , -(CH₂)₃-NH-CO- , -(CH₂)₃-NH-CO-NH- und

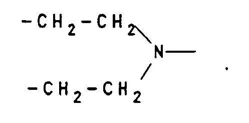

Die an den Farbstoffrest F gebundene Gruppierung der Formel (3) 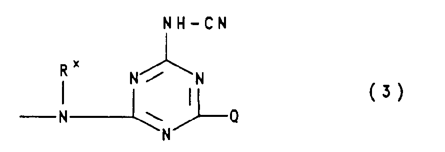
ist bevorzugt ein Rest der allgemeinen Formel (3a) oder insbesondere bevorzugt ein Rest der allgemeinen Formel (3b) 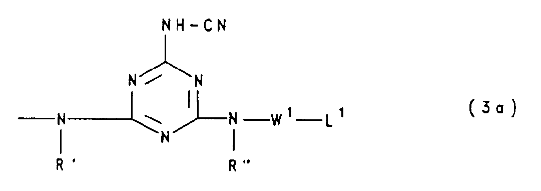 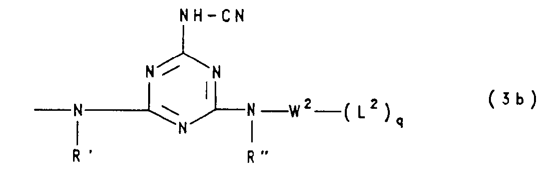
in welchen
- R′: die Methyl- oder Ethylgruppe oder insbesondere ein Wasserstoffatom ist,
- R˝: ein Wasserstoffatom oder die Methyl- oder Ethylgruppe bedeutet,
- W¹: eine Alkylengruppe von 4 bis 6 C-Atomen, die durch 1 oder 2 Sauerstoffatome und/oder Aminogruppen unterbrochen ist, oder eine Alkylengruppe von 2 bis 4 C-Atomen, bevorzugt von 2 oder insbesondere von 3 C-Atomen, bedeutet,
- W²: ein Phenylenrest, bevorzugt der 1,3- oder 1,4-Phenylenrest, ist, der durch 1 oder 2 Substituenten aus der Gruppe Methyl, Methoxy, Ethoxy und Chlor substituiert sein kann, oder eine Gruppe der allgemeinen Formel (a)

-(CH₂)_{w}-phenylen- (a)

bedeutet, in welcher w die Zahl 1, 2, 3 oder 4, bevorzugt 2, ist und phenylen den 1,3- oder 1,4-Phenylenrest bedeutet,
- L¹: Sulfo, Carboxy, Sulfato oder Phosphato ist,
- L²: Sulfo oder Carboxy ist und
- q: die Zahl 1 oder 2 ist.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Azofarbstoffe der allgemeinen Formel (1) sind beispielsweise solche der allgemeinen Formeln (4a) und (4b)

R^{G} - D₁ - N = N - (E - N = N)ᵥ - K - Z (4a)

Z - D₂ - N = N - (E - N = N)ᵥ - K - R^{G} (4b)

und die davon abgeleiteten Schwermetallkomplex-Verbindungen, wie 1:1-Kupferkomplex-Verbindungen,
in welchen
- D₁: der Rest einer Diazokomponente der Benzol- oder Naphthalinreihe ist,
- D₂: der Rest einer Diazokomponente der Diaminobenzol- oder Diaminonaphthalin-Reihe ist,
- E: der Rest einer Mittelkomponente der Benzol- oder Naphthalinreihe bedeutet,
- K: der Rest einer Kupplungskomponente der Benzol-, Naphthalin-, Pyrazolon-, 6-Hydroxypyridon(2)- oder Acetessigsäurearylamid-Reihe ist,

wobei D₁, E und K für Azofarbstoffe übliche Substitutenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und D₁, E und K zusammen mindestens zwei Sulfogruppen, vorzugsweise drei oder vier Sulfogruppen, besitzen,
- v: für die Zahl Null oder 1 steht,
- Z: eine Gruppe der Formel (3) oder bevorzugt der Formel (3a) oder (3b) ist
und
- R^{G}: eine Gruppe der allgemeinen Formel (5) 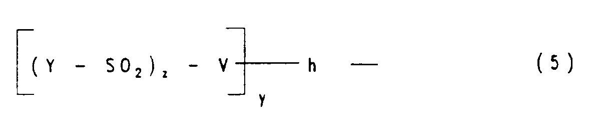 mit Y, V, h, z und g der obengenannten Bedeutung ist.

Bevorzugt sind weiterhin Azofarbstoffe der allgemeinen Formel (4c) oder (4d)

R^{G} - D₁ - N = N - K^{o} - N = N - D₂ - Z (4c)

Z - D₂ - N = N - K^{o} - N = N - D₁ - R^{G} (4d)

in welchen R^{G} die obengenannte Bedeutung besitzt, D₁ und D₂ unabhängig voneinander den Rest einer Diazokomponente der Benzol- oder Naphthalinreihe und K^{o} den Rest einer bivalenten Kupplungskomponente der Naphthalinreihe darstellt, wobei D₁, D₂ und K^{o} die für Azofarbstoffe üblichen Substituenten, wie die oben bereits erwähnten, tragen können, wobei D₁, D₂ und K^{o} zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4e), (4f) und (4g) 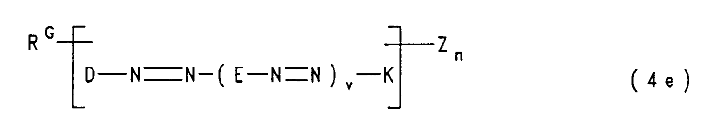 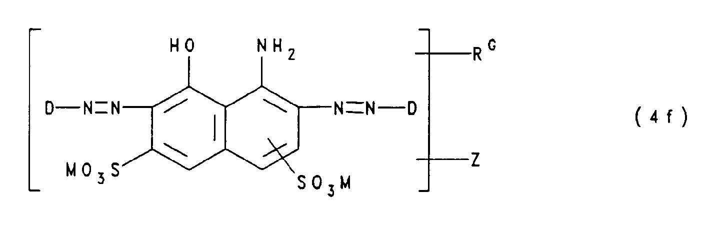 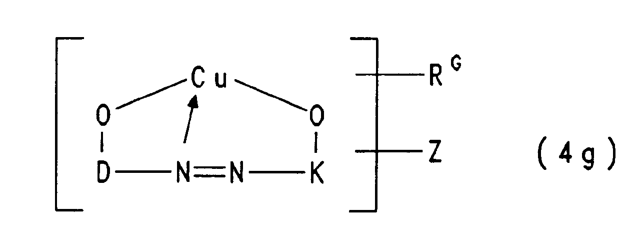
in welchen
- R^{G}: eine der obigen Bedeutungen besitzt und an D oder K gebunden ist,
- Z: einen Rest der allgemeinen Formel (3) oder (3a) oder (3b) bedeutet,
- n: die Zahl 1 oder 2, bevorzugt 1, ist,

der Rest Z an den Rest D oder den Rest K oder im Falle von n = 2 jeweils an D und K bzw. an beide gebunden ist, wobei R^{G} und Z bevorzugt nicht gleichzeitig an D oder K gebunden sind,
- D: jeweils für den Rest einer Diazokomponente, an die noch ein Azorest gebunden sein kann, steht und die zueinander gleiche oder voneinander verschiedene Bedeutungen besitzen können, und beispielsweise einen Rest D₁ obiger oder nachstehender Bedeutung darstellt,
- E: den bivalenten Rest einer kupplungsfähigen und diazotierbaren Verbindung, beispielsweise obiger oder nachstehender Bedeutung, ist,
- K: den Rest einer Kupplungskomponente, an die noch ein Azorest gebunden sein kann, darstellt, beispielsweise obiger oder nachstehender Bedeutung,
- v: für die Zahl Null oder 1 steht und
- M: ein Wasserstoffatom oder ein Alkalimetall, wie Natrium, Kalium oder Lithium, ist.

Bevorzugte erfindungsgemäße Metallkomplex-Azofarbstoffe sind beispielsweise Kupferkomplex-Azofarbstoffe der allgemeinen Formel (4h) 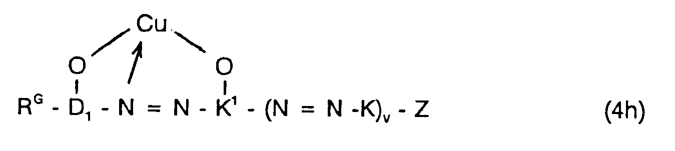
in welcher D₁, R^{G}, K, v und Z eine der obengenannten Bedeutungen haben und D₁ bevorzugt ein nachstehend aus der Formel (5c) oder (5d) ersichtlicher Rest ist, und K¹ den Rest einer amino- und hydroxygruppenhaltigen Kupplungskomponente bedeutet, wie bevorzugt der Rest eines gegebenenfalls durch 1 oder 2 Sulfogruppen substituierten Aminonaphthols ist, und wobei die beiden das Kupfer komplex bindenden Oxigruppen in ortho-Stellung bzw. vicinaler Stellung zur Azogruppe an D₁ und K¹ gebunden sind.

Aromatische Reste von Diazokomponenten, die eine faserreaktive Gruppe der Formel Y-SO₂- tragen, wie von solchen der Formeln R^{G}-D-NH₂ bzw. R^{G}-D₁-NH₂, sind beispielsweise solche der allgemeinen Formel (5a), (5b), (5c) und (5d) 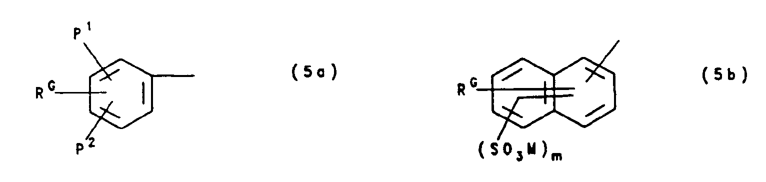 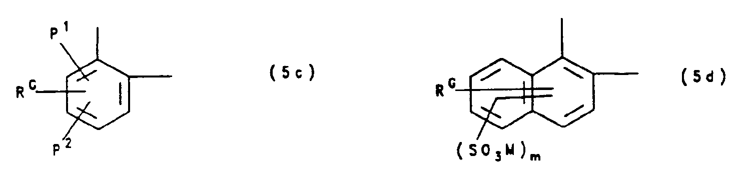
in welchen
- R^{G}: einen Rest der Formel (5) bedeutet,
- P¹: Wasserstoff, Methyl, Ethyl, Methoxy, Ethoxy, Alkanoyl von 2 bis 5 C-Atomen, wie Acetyl und inter Propionyl, Cyano, Carboxy, Sulfo, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Alkylsulfonyl von 1 bis 4 C-Atomen, Phenylsulfonyl oder Phenoxy ist,

wobei der Benzolkern in Formel (5a) und (5b) zusätslich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von p gleich Null ein Wasserstoffatom bedeutet) und
- M: die obengenannte Bedeutung hat.

Bevorzugt ist hiervon P¹ gleich Wasserstoff, Methyl, Methoxy, Brom, Chlor, Carboxy und Sulfo sowie P² gleich Wasserstoff, Methyl, Methoxy, Chlor, Carboxy, Sulfo und Acetylamino.

Aromatische Reste von als Diazokomponenten dienenden Diaminobenzol- und Diaminonaphthalin-Verbindungen entsprechend den allgemeinen Formeln H₂N-D-NH₂ bzw. H₂-N-D₂-NH₂ , die den faserreaktiven Rest Z enthalten, sind bevorzugt Reste der allgemeinen Formeln (6a) und (6b) 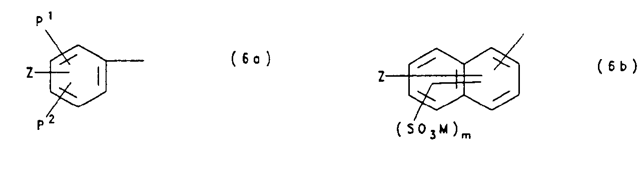
in welchen Z, M, m, P¹ und P² die oben angegebenen, insbesondere bevorzugten Bedeutungen haben, wobei der Benzolkern in Formeln (6a) und (6b) zusätzlich in ortho-Stellung zur freien Bindung, die zur Azogruppe führt, eine Hydroxygruppe enthalten kann.

Aromatische Reste E einer kupplungsfähigen und diazotierbaren Verbindung der allgemeinen Formel H-E-NH₂ sind beispielsweise solche der allgemeinen Formeln (7a), (7b) und (7c) 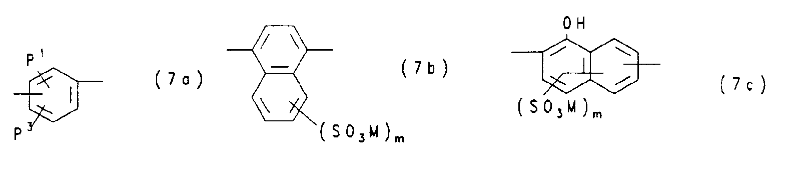
in welchen
- P¹, M und m: die oben angegebenen Bedeutungen haben und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Reste -K-R^{G} von Kupplungskomponenten der allgemeinen Formel H-K-R^{G}, die die faserreaktive Gruppe der Formel -SO₂-Y tragen, sind beispielsweise solche der allgemeinen Formeln (8a) bis (8h) 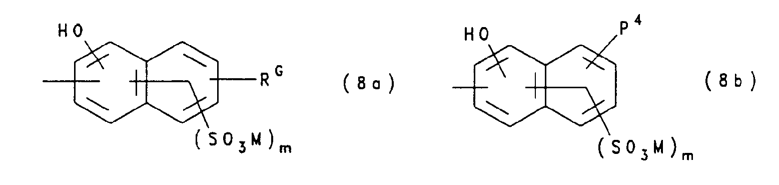 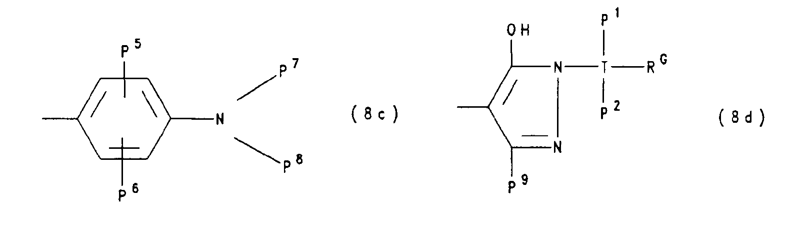 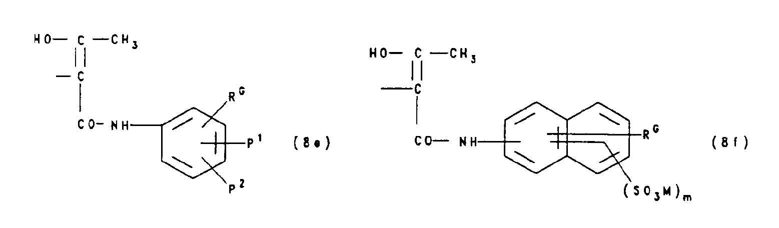 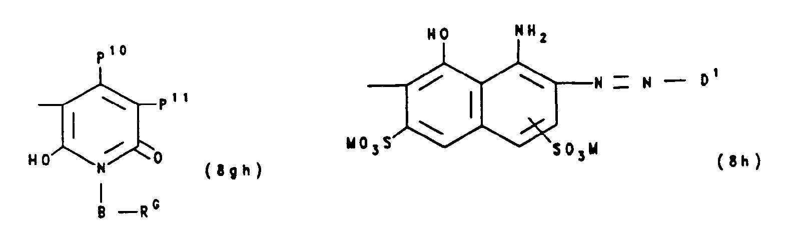
in
welchen
- R^{G}, P¹, P², m und M: die obengenannten Bedeutungen haben,
- P⁴: Phenylureido ist, das im Phenylrest durch Chlor, Methyl, Methoxy, Sulfo und/oder Carboxy und durch eine Gruppe -SO₂-Y mit Y der obigen Bedeutung substituiert ist, oder Benzoylamino ist, das im Benzolrest durch Chlor, Methyl, Methoxy, Nitro, Sulfo und/oder Carboxy und durch eine Gruppe -SO₂-Y mit Y der obigen Bedeutung substituiert ist,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
- P⁷: Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy oder eine Gruppe -SO₂-Y obiger Definition substituiert sein kann,
- P⁸: Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann und durch eine Gruppe -SO₂-Y obiger Definition substituiert ist, oder Benzyl oder Phenyl oder durch Alkyl von 1 bis 4 C-Atomen, Alkoxy von 1 bis 4 C-Atomen, Chlor und/oder Sulfo substituiertes Phenyl ist, wobei jeweils der Phenylrest durch eine Gruppe -SO₂-Y obiger Definition substituiert ist,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsufonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,
- B: Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
- D¹: ein Rest der allgemeinen Formel (5a) oder (5b) ist.

Reste -K-Z von Kupplungskomponenten der allgemeinen Formel H-K-Z bzw. H-K-N(R^{x})H sind beispielsweise Reste der allgemeinen Formeln (9a) bis (9h) 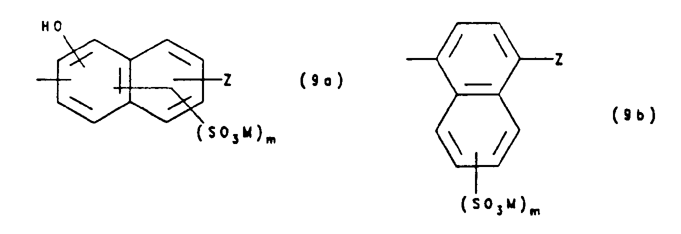 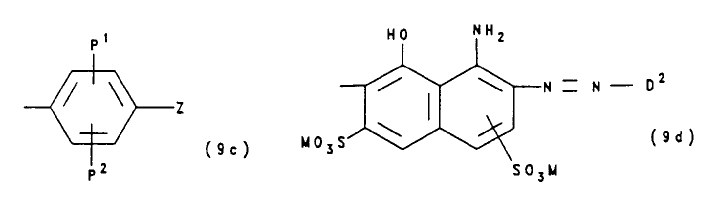 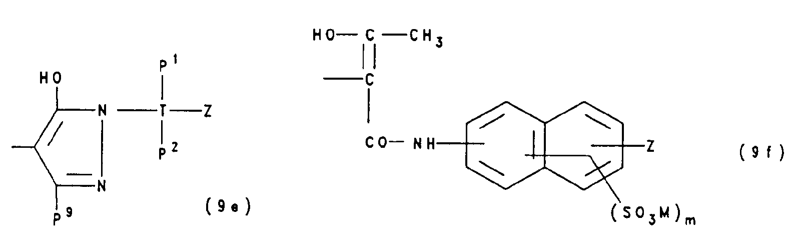 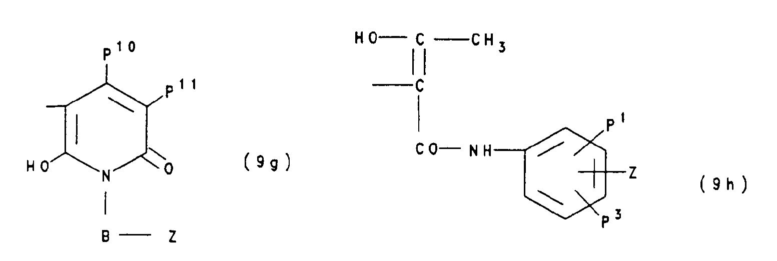
in welchen
R, P¹, P², P⁹, P¹⁰, P¹¹, B, T, M, m und Z die oben angegebenen, insbesondere bevorzugten, Bedeutungen haben und
- D²: als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K bzw. K¹ in den Formeln (4g) und (4h) mit einem metallkomplexbindenden Sauerstoffatom, die die Gruppe Z enthalten, sind insbesondere solche der Formeln (10a) bis (10e) 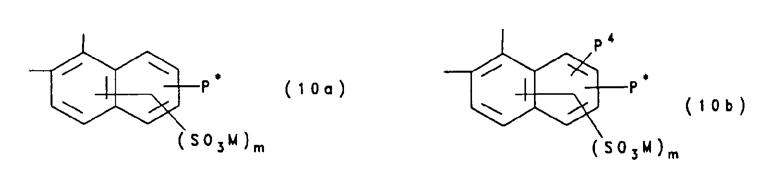 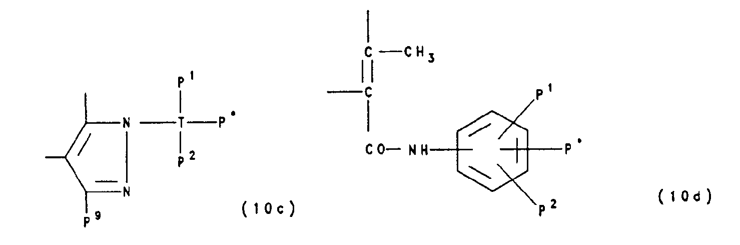 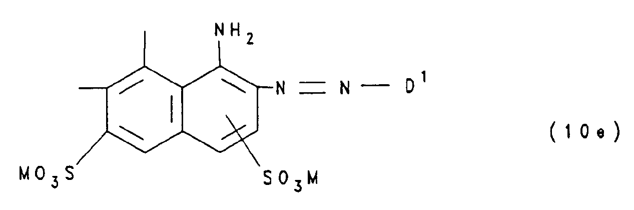
in welchen die einzelnen Formelglieder eine der obengenannten Bedeutungen haben und P* entweder einen Rest Z oder eine Gruppierung der Formel -N=N-K-Z bedeutet.

Gruppen der allgemeinen Formel (5a) und (5b) sind beispielsweise: 2-(β-Sulfatoethylsulfonyl)-phenyl, 3-(β-Sulfatoethylsulfonyl)phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Ethoxy-4- oder -5-(β-sulfatoethylsulfonyl)-phenyl, 2-Ethyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-3-sulfo-5-(β-sulfatoethylsulfonyl)-phenyl, 3- oder 4-(β-Acetoxyethylsulfonyl-phenyl, 5-(β-Sulfatoethylsulfonyl)-naphth-2-yl, 6- oder 7- oder 8(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 3- oder 4-{β-[4-(β′-Sulfatoethylsulfonyl)-phen]-ethylamino}-phenyl, 3- oder 4-{β-[2-Sulfo-4-(β′-sulfatoethylsulfonyl)-phen]-ethylamino}-phenyl, 3- oder 4-[β-(β′-Chlorethylsulfonyl)-ethylamino]-phenyl, 3- oder 4-[β-(β′-Sulfatoethylsulfonyl)-ethylamino]-phenyl, 3- oder 4-[β-(Vinylsulfonyl)-ethylamino]-phenyl, 3- oder 4-[γ-(β′-Chlorethylsulfonyl)-propylamino]-phenyl, 3- oder 4-[γ-(β′-Sulfatoethylsulfonyl)-propylamino]-phenyl, 3- oder 4-[γ-(Vinylsulfonyl)-propylamino]-phenyl, 3,4-Di-(β-sulfatoethylsulfonyl)-phenyl, 2,5-Di-(β-sulfatoethylsulfonyl)-phenyl, 4-[γ-(β′-Sulfatoethylsulfonyl)-propoxy]-phenyl, 2,5-Bis-[(β-sulfatoethylsulfonyl)-methyl]-phenyl, 3- oder 4-{N-[γ-(β′-Sulfatoethylsulfonyl)-propyl-amidocarbonyl]}-phenyl, 3,5-Bis-{N-[γ-(β′-sulfatoethylsulfonyl)-propyl-amidocarbonyl]}-phenyl, 3-Sulfo-4-{[N-γ-(β′-sulfatoethylsulfonyl)-propyl-amidocarbonyl]-methoxy}-phenyl und 4-{[N-γ-(β′-Sulfatoethylsulfonyl)-propyl-amidocarbonyl]-methoxy}-phenyl.

Von den erfindungsgemäßen Phthalocyaninfarbstoffen sind diejenigen bevorzugt, die der allgemeinen Formel (11) 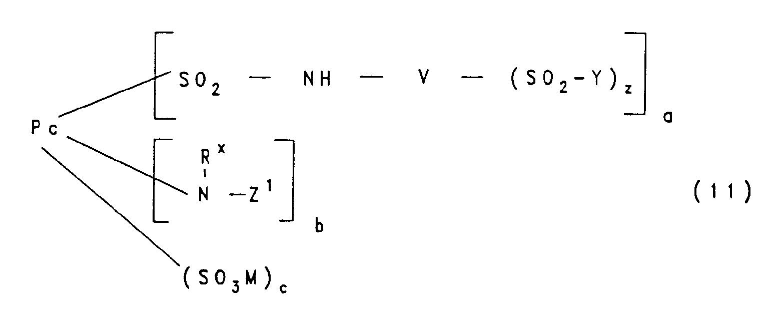
entsprechen, in welcher
- Pc: den Kupfer- oder Nickelphthalocyaninrest bedeutet,
- Z¹: eine Gruppe der allgemeinen Formel (3A) oder bevorzugt (3B) oder (3C) 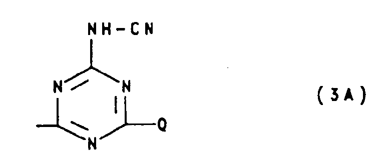 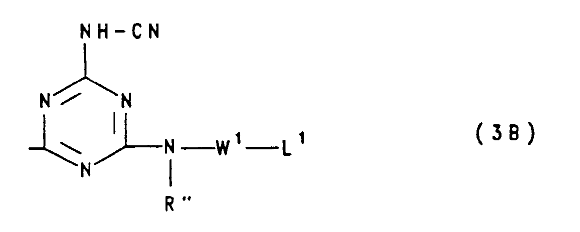 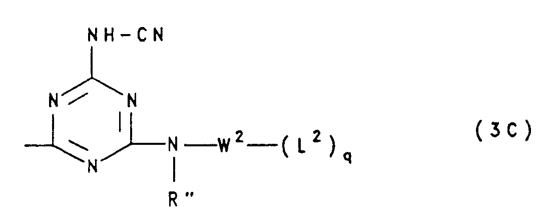 ist, in welchen Q, R˝, W¹, W², L¹, L² und q die obengenannten, insbesondere bevorzugten, Bedeutungen haben,
- a: eine Zahl von 1 bis 3 bedeutet,
- b: eine Zahl von 1 bis 2 bedeutet und
- c: eine Zahl von 0 bis 2 bedeutet, wobei die Summe von (a+b+c) höchstens 4 ist und die Summe von (a+b) eine Zahl von 2 bis 4 ist, und

V,Y,R^{x}, M und z eine der obengenannten, insbesondere bevorzugten, Bedeutungen haben.

Von den Azofarbstoffen sind weiterhin bevorzugt solche, die den allgemeinen Formeln (12A) bis (12V) 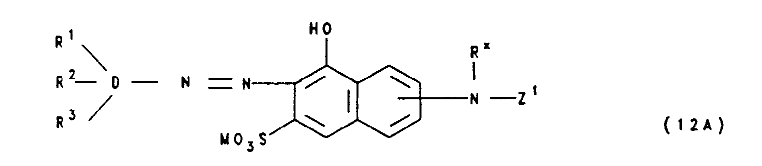 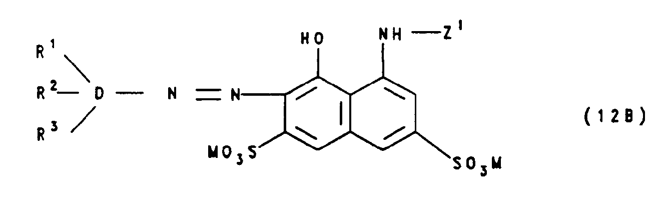 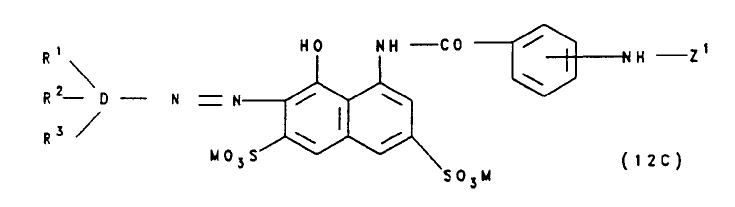 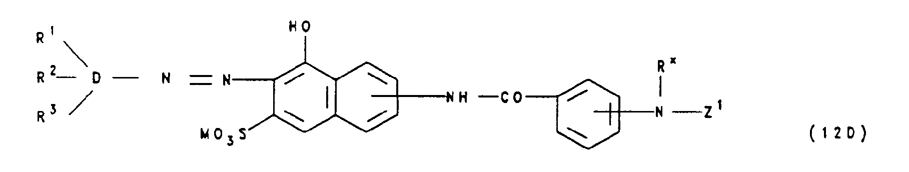 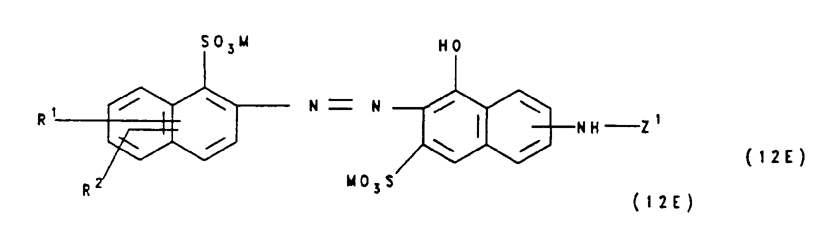 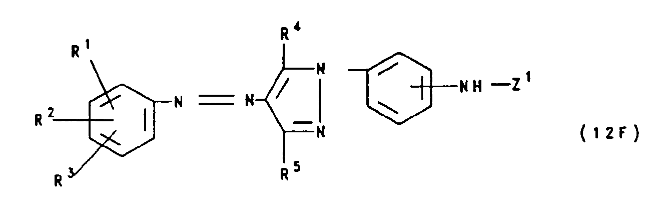 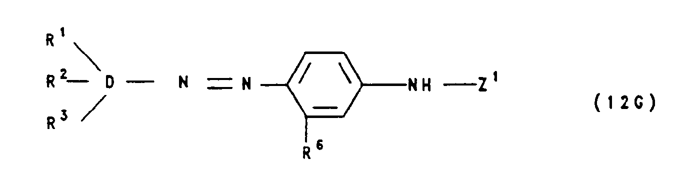 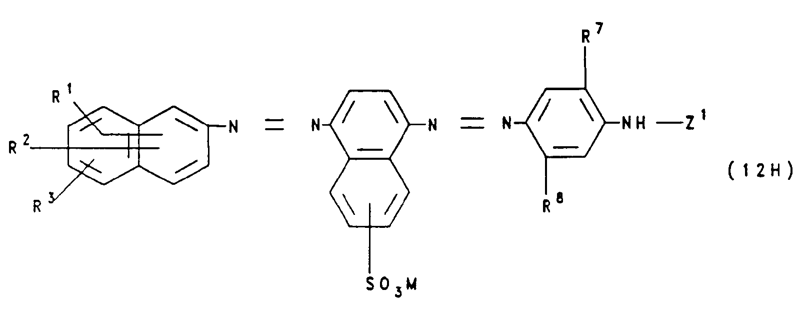 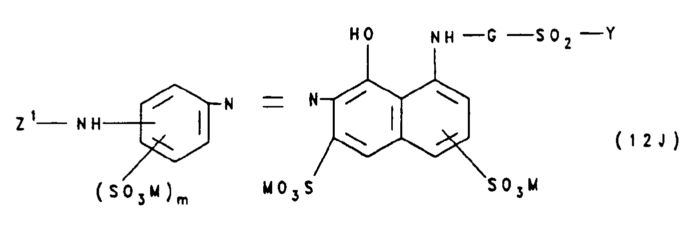 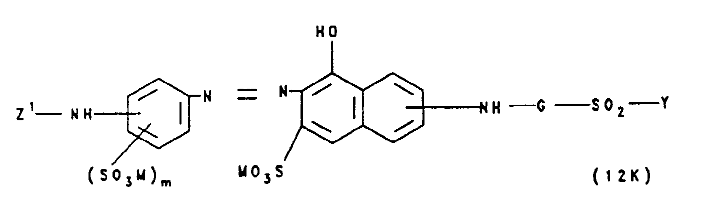 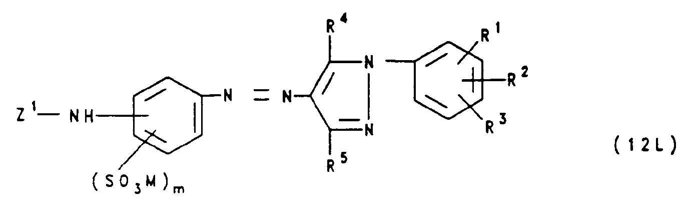 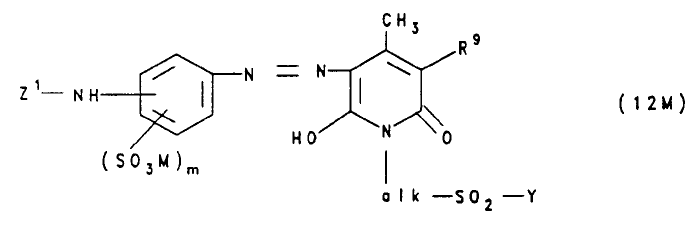 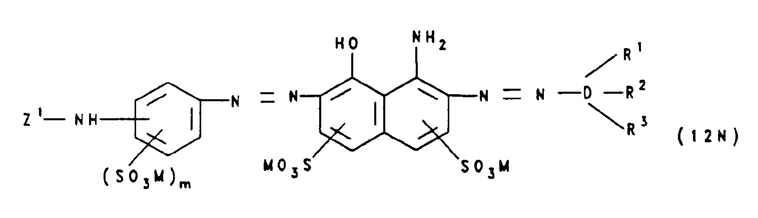 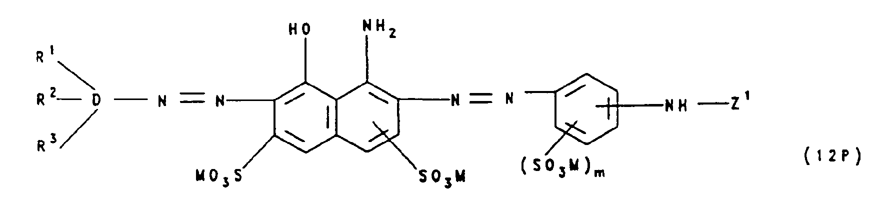 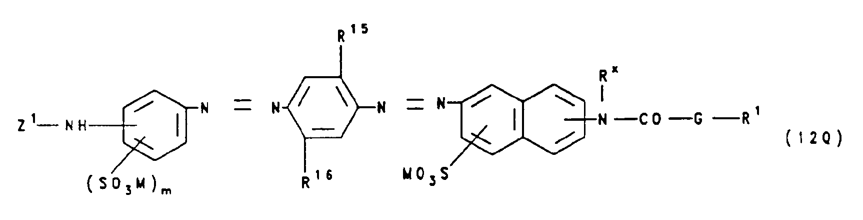 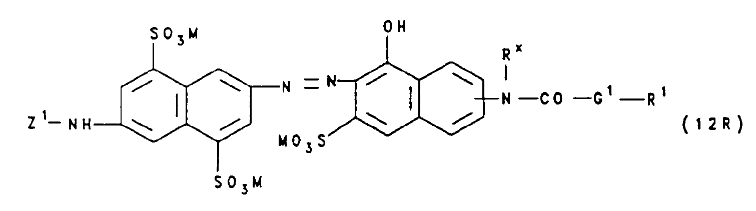 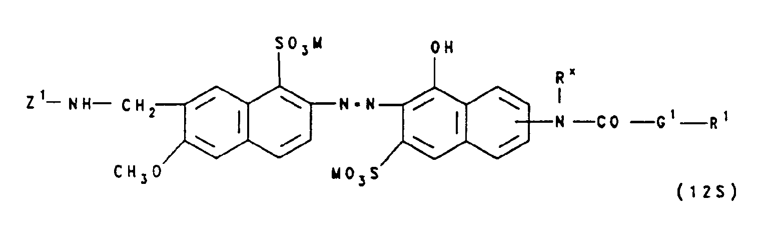 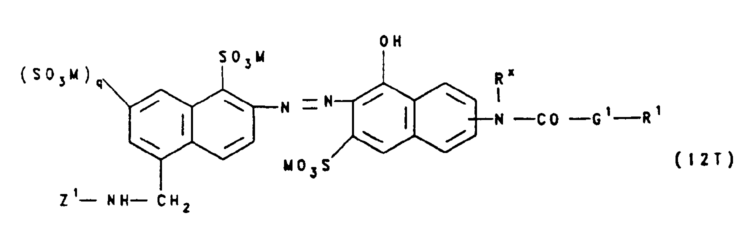 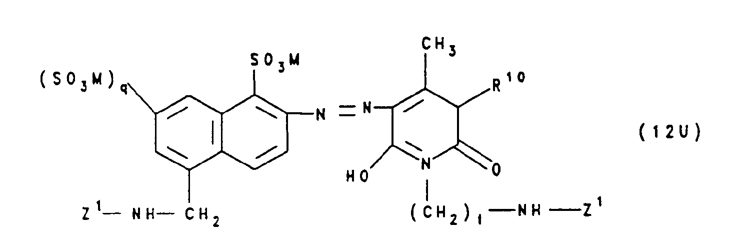 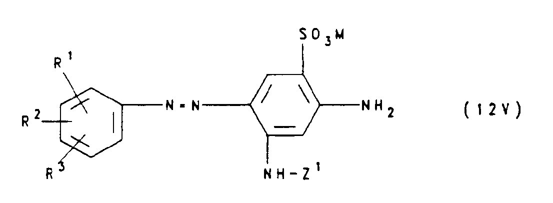
entsprechen, in welchen bedeuten:
- Z¹: ist ein Rest der Formel (3A), (3B) oder (3C);
- M: hat eine der obengenannten Bedeutungen;
- R^{x}: ist Wasserstoff oder Alkyl von 1 bis 4 C-Atomen, wie Methyl oder Ethyl;
- D: ist ein Benzolring oder ist ein Naphthalinring, wobei die Azogruppe an den Naphthalinring bevorzugt in β-Stellung gebunden ist und wobei im Falle, daß D den Naphthalinring bedeutet, R² und R³ bevorzugt jedes, unabhängig voneinander, ein Wasserstoffatom oder eine Sulfogruppe bedeuten;
- R¹: ist β-Sulfatoethylsulfonyl, β-Chlorethylsulfonyl oder Vinylsulfonyl;
- R²: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, oder eine Gruppe der Formel -SO₂-Y mit Y der obengenannten Bedeutung, wie β-Sulfatoethylsulfonyl, β-Chlorethylsulfonyl oder Vinylsulfonyl und ist bevorzugt Wasserstoff;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;
- R⁴: ist Hydroxy oder Amino, bevorzugt Hydroxy;
- R⁵: ist Methyl, Carboxy, Carbomethoxy oder Carbethoxy, bevorzugt Methyl oder Carboxy;
- R⁶: ist Acetylamino, Ureido oder Methyl;
- R⁷: ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;
- R⁸: ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- R⁹: ist Wasserstoff, Cyano, Carbamoyl, Sulfamoyl oder Sulfomethyl, bevorzugt Wasserstoff oder Carbamoyl;
- R¹⁰: ist Cyano, Carbamoyl oder Sulfomethyl;
- alk: ist Alkylen von 2 bis 4 C-Atomen, vorzugsweise Ethylen;
- G: ist Alkylen von 2 bis 4 C-Atomen, vorzugsweise n-Ethylen oder insbesondere n-Propylen, oder ist Carbonylphenylen;
- G¹: ist Phenylen oder ist ein Rest der Formel -NH-(CH₂)₃- ;
- m: ist die Zahl Null, 1 oder 2 (wobei im Falle von m gleich Null diese Gruppe Wasserstoff ist);
- q: steht für die Zahl Null oder 1 (wobei im Falle von q gleich Null diese Gruppe Wasserstoff bedeutet);
- t: steht für die Zahl 2 oder 3;

in den Verbindungen der Formeln (12A), (12D), (12E), (12K) und (12Q) bis (12T) steht die Aminogruppierung mit dem faserreaktiven Rest in 2- oder 3-Stellung an den 8-Naphthol-Rest gebunden.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweiligen Farbstoffklasse spezifischen Synthesewegen herstellen, indem man für den jeweiligen Farbstoff typische Vorprodukte, von denen mindestens eines eine Gruppe der allgemeinen Formel (3) und mindestens eines eine Gruppe der allgemeinen Formel (5) enthält, miteinander umsetzt, oder indem man von einer aminogruppenhaltigen Ausgangsverbindung der allgemeinen Formel (55) 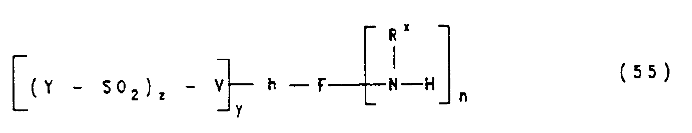
in welcher F, R^{x} und n die obengenannten Bedeutungen haben, ausgeht und diese mit einem Trihalogen-s-triazin, der allgemeinen Formel (56) 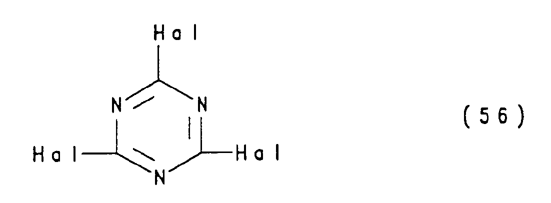
in welcher Hal für ein Halogenatom, wie insbesondere Chlor- oder Fluoratom, steht mit Cyanamid oder einem Alkalimetallsalz davon und mit einem Amin der allgemeinen Formel H-Q mit Q der obengenannten Bedeutung in stöchiometrischen Mengen in beliebiger Reihenfolge miteinander umsetzt und gegebenenfalls anschließend weitere, dem Fachmann geläufige, erforderliche Umwandlungsreaktionen durchführt.

Insbesondere lassen sich die erfindungsgemäßen Farbstoffe erfindungsgemäß herstellen, indem man eine Verbindung entsprechend der allgemeinen Formel (57) 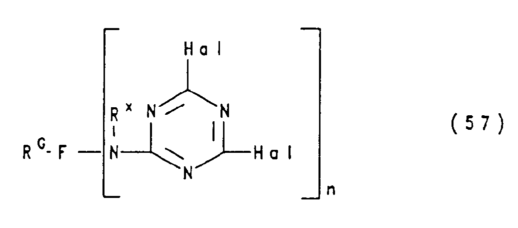
in welcher R^{G}, F, R^{x} und n die obengenannte Bedeutungen haben und Hal für ein Halogenatom, wie insbesondere ein Chlor- oder Fluoratom, steht, mit Cyanamid oder einem Alkalimetallsalz davon umsetzt und die so erhaltene Verbindung der allgemeinen Formel (58) 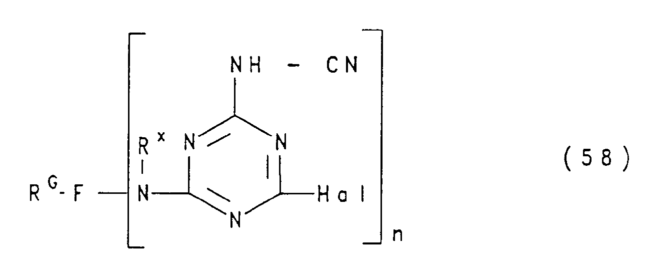
in welcher R^{G}, F, R^{x} und Hal die obengenannten Bedeutungen haben, mit einem Amin der allgemeinen Formel H-Q mit Q der obengenannten Bedeutung umsetzt,
oder indem man eine Verbindung der allgemeinen Formel (59) 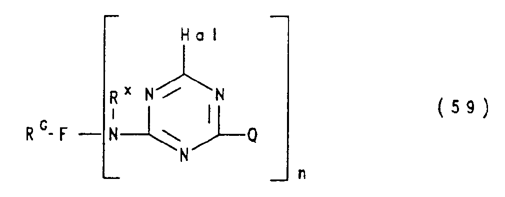
in welcher R^{G}, F, R^{x}, Hal, Q und n die obengenannten Bedeutungen haben, mit Cyanamid oder einem Alkalimetallsalz davon umsetzt,
oder indem man eine Verbindung der allgemeinen Formel (55) mit einer Verbindung der allgemeinen Formel (60) 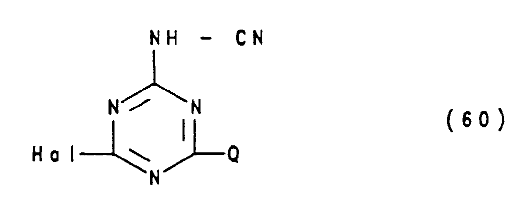
mit Hal und Q der obengenannten Bedeutung umsetzt.

Die Umsetzungen der Ausgangsverbindungen erfolgen im wäßrigen oder wäßrigorganischen Medium in Suspension oder Lösung. Führt man die Umsetzungen in einem wäßrig-organischen Medium durch, so ist das organische Medium beispielsweise Aceton, Dimethylformamid und N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert.

Die Umsetzung der Ausgangsverbindungen der allgemeinen Formel (58) mit dem Amin der allgemeinen Formel H-Q erfolgt bei einer Temperatur zwischen 30 und 100°C, vorzugsweise zwischen 65 und 85°C, und bei einem pH-Wert zwischen 3 und 11,5, vorzugsweise zwischen 3,5 und 7, und die Umsetzung der Verbindung der Formel (55) mit der Verbindung der allgemeinen Formel (60) vorzugsweise bei einer Temperatur zwischen 25 und 90°C, insbesondere zwischen 45 und 75°C, und bei einem pH-Wert zwischen 3 und 11,5, insbesondere zwischen 3,5 und 6,5.

Verbindungen der allgemeinen Formel (58) lassen sich außer der Umsetzung einer Verbindung der Formel (57) mit Cyanamid auch so herstellen, daß man, analog bekannten Verfahrensweisen, ein entsprechendes 2,4-Dihalogeno-6-cyanamido-s-triazin mit einer Ausgangsverbindung der allgemeinen Formel (55) umsetzt oder, ebenfalls analog bekannten Verfahrensweisen, durch Reaktion eines für den Farbstofftyp üblichen Farbstoffvorproduktes, das jedoch eine Gruppe der allgemeinen Formel (61) 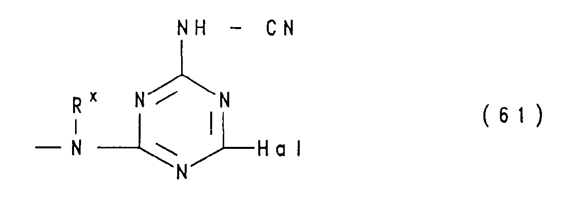
enthält, in welcher R^{x} und Hal die obengenannten Bedeutungen haben, mit einem weiteren, eine Gruppe der Formel (5) enthaltendem Vorprodukt.

Das Amin der Formel H-Q wird in der Regel in Form eines Salzes, wie eines Sulfats oder bevorzugt in Form des Hydrochlorids, in die Umsetzungen eingesetzt.

Geht man bei der erfindungsgemäßen Synthese der Azofarbstoffe von Diazo- und Kupplungskomponenten aus, die die Gruppen der allgemeinen Formeln (3) und (5) enthalten, erfolgen die Umsetzungen in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Schwermetallkomplex-Azofarbstoffen, beispielsweise solchen entsprechend der allgemeinen Formel (4h), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest.

Beispielsweise kann man bei der Synthese der Kupferkomplex-Azofarbstoffe der Formel (4h) von einer Ausgangsverbindung entsprechend der allgemeinen Formel (62) 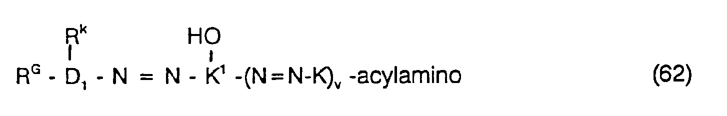
ausgehen, in welcher D₁, K, K¹ und v eine der obengenannten Bedeutungen haben und R^{k} ein Wasserstoffatom oder eine in ortho-Stellung zur Azogruppe an D₁ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist R^{k} ein Wasserstoffatom oder eine Methoxygruppe, so kann man die Verbindung (62) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einem Cyanurhalogenid bzw. einer Verbindung der Formel (60) zu dem erfindungsgemäßen Farbstoff der allgemeinen Formel (1) umgesetzt werden.

Ausgangsverbindungen mit einer faserreaktiven Gruppierung R^{G}, die als Diazokomponenten dienen können, sind beispielsweise: 2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5- oder -4-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 5-(β-Sulfatoethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin, 3- oder 4-{β-[4-(β′-Sulfatoethylsulfonyl)-phen]-ethylamino}-anilin, 3- oder 4-{β-[2-Sulfo-4-(β′-sulfatoethylsulfonyl)-phen]-ethylamino}-anilin, 3- oder 4-[β-(β′-Chlorethylsulfonyl)-ethylamino]-anilin, 3- oder 4-[β-(β′-Sulfatoethylsulfonyl)-ethylamino]-anilin, 3- oder 4-[β-(Vinylsulfonyl)ethylamino]-anilin, 3- oder 4-[γ-(β′-Chlorethylsulfonyl)-propylamino]-anilin, 3- oder 4-[γ-(β′-Sulfatoethylsulfonyl)-propylamino]-anilin, 3- oder 4-[γ-(Vinylsulfonyl)-propylamino]-anilin, 3,4-Di-(β-sulfatoethylsulfonyl)-anilin, 2,5-Di-(β-sulfatoethylsulfonyl)-anilin, 4-[γ-(β′-Sulfatoethylsulfonyl)-propoxy]-anilin, 2,5-Bis-[(β-sulfatoethylsulfonyl)-methyl]-anilin, 3- oder 4-{N-[γ-(β′-Sulfatoethylsulfonyl)-propyl-amidocarbonyl]}-anilin, 3,5-Bis-{N-[γ-(β′-sulfatoethylsulfonyl)-propyl-amido-carbonyl]}-anilin, 3-Sulfo-4-{[N-γ-(β′-sulfatoethylsulfonyl)-propyl-amidocarbonyl]-methoxy}anilin und 4-{[N-γ-(β′-Sulfatoethylsulfonyl)-propyl-amidocarbonyl]-methoxy}-anilin.

Ausgangsverbindungen entsprechend der allgemeinen Formel H₂N-D-NH₂ bzw. H₂N-D₁-NH₂ sind beispielsweise 1,4-Phenylen-diamin, 1,4-Phenylendiamin-2-sulfonsäure, 1,4-Phenylendiamin-2-carbonsäure- 1,4-Diamino-naphthalin-2-sulfonsäure, 2,6-Diamino-naphthalin-8-sulfonsäure, 2,6-Diamino-naphthalin-4,8-disulfonsäure, 1,3-Phenylen-diamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure, 1,4-Diamino-naphthalin-6-sulfonsäure, 4,4′-Diamino-diphenyl-3-sulfonsäure und 4,4′-Diamino-stilben-2,2′-disulfonsäure.

Ausgangsverbindungen entsprechend der allgemeinen Formel H-E-NH₂, die zur Synthese der erfindungsgemäßen Disazofarbstoffen eingesetzt werden können und als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Aminonaphthalin-7-sulfonsäure, 2-Sulfo-5-acetylamino-anilin, 2-Amino-5-naphthol-7-sulfonsäure, 2-Amino-8-naphthol-6-sulfonsäure, 2-(4′-Amino-benzoylamino)-5-naphthol-7-sulfonsäure, 1-(4′-Amino-2′-sulfo-phenyl)-3-methyl- oder -3-carboxy-5-pyrazolon und N-(Acetoacetyl)-3-sulfo-4-amino-anilid.

Ausgangsverbindungen, die als Kupplungskomponenten entsprechend der allgemeinen Formel H-K-R^{G} zur Synthese der erfindungsgemäßen Azofarbstoffe dienen können, sind beispielsweise 1-[4′-(β-Sulfatoethyl-sulfonyl)-phenyl]-3-methyl-5-pyrazolon, 1-[4′-(Vinyl-sulfonyl)-phenyl]-3-methyl-5-pyrazolon, 1-(4′-(β-Sulfatoethylsulfonyl)-phenyl]-3-carboxy-5-pyrazolon, 1-[3′-[β-Chlorethylsulfonyl)-benzoylamino]-3,6-disulfo-8-naphthol, 1-[3′-(Vinylsulfonyl)-benzoylamino]-3,6-disulfo-8-naphthol, 1-[3′-(Vinylsulfonyl)-benzoylamino]-4,6-disulfo-8-naphthol, 1-[3′-(β-Sulfatoethylsulfonyl)-benzoylamino]-4,6-disulfo-8-naphthol, 2-[3′-(β-Chlorethylsulfonyl)-benzoylamino]-6-sulfo-8-naphthol, 2-[3′-(Vinylsulfonyl)-benzoylamino]-6-sulfo-8-naphthol, 3-[3′-(β-Chlorethylsulfonyl)-benzoylamino]-6-sulfo-8-naphthol, 3-[3′-(Vinylsulfonyl)-benzoyl-amino]-6-sulfo-8-naphthol, 6-Sulfo-1-[3′-(β-chlorethylsulfonyl)-benzoylamino]-naphthol, 7-Sulfo-[3′-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N′-(3′-β-Chlorethylsulfonyl-phenyl)-ureido]-3,6-disulfo-8-naphthol, 1-[N′-(3′-Vinylsulfonyl-phenyl)-ureido]-3,6-disulfo-8-naphthol, 1-[N′-(3′-Vinylsulfonyl-propyl)-ureido]-3,6-disulfo-8-naphthol, 1-[N′-(3′-β-Chlor-ethylsulfonyl-phenyl)-ureido]-4,6-disulfo-8-naphthol, 1-[N′-(3′-Vinylsulfonyl-phenyl)-ureido]-4,6-disulfo-8-naphthol, 1-[N′-(3′-β-Chlorethylsulfonyl-propyl)-ureido]-4,6-disulfo-8-naphthol, 2-[N′-(3′-β-Sulfatoethylsulfonyl-phenyl)-ureido]-6-sulfo-8-naphthol, 2-[N′-(3′-Chlorethylsulfonyl-propyl)-ureido]-6-sulfo-8-naphthol, 3-[N′-(3′-β-Chlorethylsulfonyl-phenyl)-ureido]-6-sulfo-8-naphthol, 3-[N′-(3′-Vinylsulfonyl-propyl)-ureido]-6-sulfo-8-naphthol, 2-Sulfo-5-[N′-(3′′-β-chlorethylsulfonyl)-phenyl]-ureido-anilin, 3-[N′-(3˝-β-Sulfatoethylsulfonyl)-phenyl]-ureido-anilin und 6-Sulfo-1-[N′-(3′′-β-Sulfatoethylsulfonyl)-phenyl]-ureido-8-naphthol.

Kupplungskomponenten entsprechend der allgemeinen Formel H-K-N(R^{x})H , die zum Aufbau der erfindungsgemäßen Azofarbstoffe dienen können, in welchen der faserreaktive Rest Z in der Kupplungskomponente enthalten ist, wobei bei dem zunächst erhaltenen aminogruppenhaltigen Azofarbstoff entsprechend der allgemeinen Formel (55) in dessen Aminogruppe -N(R^{x})H der faserreaktive Rest Z¹ oder ein anderer vorgenannter Halogentriazinrest anschließend eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure; 1-Amino-naphthalin-7-sulfonsäure, 4-Sulfo-1,3-diamino-benzol, 6-Sulfo-2-methoxy-1-amino-naphthalin, 5,7-Disulfo-2-aminonaphthalin, 1-Amino-8-hydroxy-naphthalin-4-sulfonsäure, 1-Amino-8-hydroxynaphthalin-6-sulfonsäure, 1-Amino-8-hydroxynaphthalin-2,4-disulfonsäure, 1-Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)-und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4′-Amino-3′-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 1-(4′-Aminobenzoyl)-amino-8-hydroxynaphthalin-4,6-disulfonsäure, 1-(3′-Aminobenzoyl)-amino-8-hydroxynaphthalin-3,6-disulfonsäure, 1-(3′-Aminobenzoyl)-amino-8-hydroxynaphthalin-4,6-disulfonsäure, 1-(2′-Aminobenzoyl)-amino-8-hydroxynaphthalin-3,6-disulfonsäure, 1-(2′-Aminobenzoyl)-amino-8-hydroxynaphthalin-4,6-disulfonsäure, 2-(3′-Aminobenzoyl)-amino-5-hydroxy-naphthalin-7-sulfonsäure, 2-(2′-Aminobenzoyl)-amino-5-hydroxy-naphthalin-7-sulfonsäure, 2-(4′-Aminobenzoyl)-amino-8-hydroxynaphthalin-6-sulfonsäure, 2-(3′-Aminobenzoyl)-amino-8-hydroxynaphthalin-6-sulfonsäure, 2-(2′-Aminobenzoyl)-amino-8-hydroxynaphthalin-6-sulfonsäure, 2-(4′-Aminobenzoyl)-amino-5-naphthol-7-sulfonsäure, 1-(4′-Amino- oder 1-(4′-Acetylamino-2-sulfophenyl)-3-methyl- oder -3-carboxy-5-pyrazolon, N-(Acetoacetyl)-3-sulfo-4-amino-anilid, 1-Amino-8-naphthol-3,6- oder -4,6-disulfonsäure, 1-(3′-Aminobenzoyl)- oder 1-(4′-Aminobenzoyl)-amino-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methylamino)-8-naphthol-6-sulfonsäure, 1-(3′-Amino- oder 1-(3′-Acetylamino-6′-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Geht man von Diazokomponenten der Formel H₂N-D-NH₂ bzw. H₂N-D₁-NH₂ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven Rest Z¹ verbunden werden. Solche monoacylierten Diamine sind beispielsweise 2-Sulfo-5-acetylamino-anilin und 2-Sulfo-4-acetylamino-anilin. In gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit der faserreaktiven Gruppe Z¹ zu verbinden.

Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine einen faserreaktiven Rest R^{G} und die andere einen faserreaktiven Rest Z enthält, beispielsweise von Farbstoffen der allgemeinen Formeln (4c) und (4d), sind beispielsweise Resorcin, 1,3-Diaminobenzol, 5,5′-Dihydroxy-7,7′-disulfo-2,2′-dinaphthyl-harnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

Die erfindungsgemäßen Phthalocyaninfarbstoffe können hergestellt werden, indem man von einem gegebenenfalls sulfogruppenhaltigen Phthalocyaninsulfochlorid ausgeht und dieses in beliebiger Reihenfolge mit Aminoverbindungen umsetzt wobei die eine Aminoverbindung einen faserreaktiven Rest R^{G} enthält und die andere Aminoverbindung entweder den faserreaktiven Rest Z besitzt oder aber eine Diaminoverbindung ist, in welcher diejenige Aminogruppe, die sich nicht mit dem Phthalocyaninsulfochlorid umsetzt, dazu bestimmt ist, die faserreaktive Gruppe Z¹ aufzunehmen. Zusätzlich zu diesen beiden Arten von Aminoverbindungen können auch solche Aminoverbindungen eingesetzt werden, die keine faserreaktive Gruppierung besitzen, wie beispielsweise Verbindungen, die denen der allgemeinen Formel H-Q mit Q der obigen Bedeutungen entsprechen, wobei in diesem Falle W den wasserlöslich machenden Substituenten nicht zwingend enthalten muß. Bei der Umsetzung der Phthalocyaninsulfochloride mit den Aminoverbindungen, die vorzugsweise in wäßrigem Medium und bei einer Temperatur zwischen 20 und 45°C und bei einem pH-Wert zwischen 5,5 und 7,5 durchgeführt wird, kann ein Teil der Sulfochloridgruppen durch Hydrolyse in Sulfogruppen übergeführt werden. Diese Umsetzungsreaktionen sind in der Literatur bekannt, wie beispielsweise aus der US-Patentschrift 4 745 187. Die erfindungsgemäße Synthese der erfindungsgemäßen Phthalocyaninfarbstoffe kann in analoger Weise hierzu ausgeführt werden.

So kann man beispielsweise die erfindungsgemäßen Phthalocyaninfarbstoffe der allgemeinen Formel (11) in der Weise herstellen, daß man ein Phthalocyaninsulfochlorid der allgemeinen Formel (63) 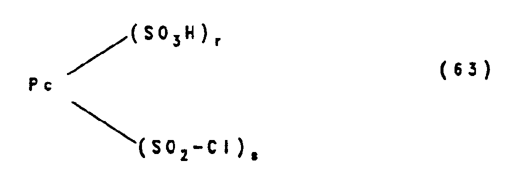
in welcher Pc die obengenannte Bedeutung besitzt, r für eine Zahl von 0 bis 2, bevorzugt Null, steht und s eine Zahl von 1 bis 4 bedeutet, wobei die Summe von (r + s) höchstens 4 ist, mit einer Aminoverbindung der allgemeinen Formel (64) und einer Aminoverbindung der allgemeinen Formel (65)

H₂N - D - V - (SO₂-Y)_{z} (64)

H - N(R^{x}) - Z¹ (65)

in welchen V, Y, z, R^{x} und Z¹ die obengenannten Bedeutungen haben, unter den obengenannten Bedingungen miteinander umsetzt. Die Phthalocyaninfarbstoffe der allgemeinen Formel (11) können aber auch in der Weise hergestellt werden, daß man zunächst eine Verbindung der allgemeinen Formel (63) mit einer Aminoverbindung der allgemeinen Formel (64) und einem Amin der allgemeinen Formel H₂NR^{x} umsetzt und anschließend in die freie Aminogruppe die faserreaktive Gruppe Z¹ einführt, beispielsweise entweder durch Umsetzung mit einer Verbindung der allgemeinen Formel (60) oder durch Umsetzung zunächst mit einem Cyanurhalogenid und anschließend mit Cyanamid und dem Amin der Formel H-Q oder durch Umsetzung eines Dihalogeno-cyanamido-s-triazins mit nachfolgender Umsetzung des Amins H-Q.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur beschrieben.

Gegenstand der vorliegenden Erfindung ist deshalb auch die Verwendung der erfindungsgemäßen Farbstoffe der allgemeinen Formel (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff der allgemeinen Formel (1) als Farbmittel eingesetzt wird, indem man den Farbstoff der allgemeinen Formel (1) im wäßrigen Medium auf das Material appliziert und ihn mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten. Sie sind weiterhin sehr gut für den Einsatz in die Ätzdruck- und Reservedruckverfahren geeignet.

Die mit den erfindungsgemäßen Farbstoffen hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Eine Suspension von 46 Teilen Cyanurchlorid in 400 Teilen Wasser wird bei 0°C mit 10,7 Teilen Cyanamid versetzt; die Umsetzung erfolgt bei einem pH-Wert zwischen 8 und 8,5. Nach einer Stunde stellt man auf einen pH-Wert von 2 bis 2,5 ein, gibt 73 Teile 1-Amino-8-naphthol-3,6-disulfonsäure hinzu, erwärmt den Ansatz auf 35°C und führt die zweite Kondensationsreaktion unter Einhaltung des pH-Wertes von 2 bis 2,5 durch. Nach etwa 4 Stunden gibt man 44,5 Teile 3-Sulfo-anilin hinzu, erwärmt den Ansatz auf 80°C unter Einhaltung eines pH-Wertes von 2,5 und führt die Umsetzung unter Einhaltung dieser Reaktionbedingungen während einer Stunde zu Ende.

Zu dieser Lösung der Kupplungskomponente gibt man die auf üblichem Wege hergestellte wäßrige Diazoniumsalzsuspension aus 72,1 Teilen 4-(β-Sulfatoethylsulfonyl)-anilin und führt die Kupplungsreaktion bei einem pH-Wert von 4 bis 4,5 und einer Temperatur von etwa 20°C durch.

Die erhaltene erfindungsgemäße Azofarbstoff wird nach Klären der Syntheselösung auf üblichem Wege in Form seines Alkalimetallsalzes (Natriumsalzes) isoliert, beispielsweise durch Aussalzen mit Natriumchlorid, durch Eindampfen unter reduziertem Druck oder durch Sprühtrocknung. Er besitzt, in Form der freien Säure geschrieben, die Formel 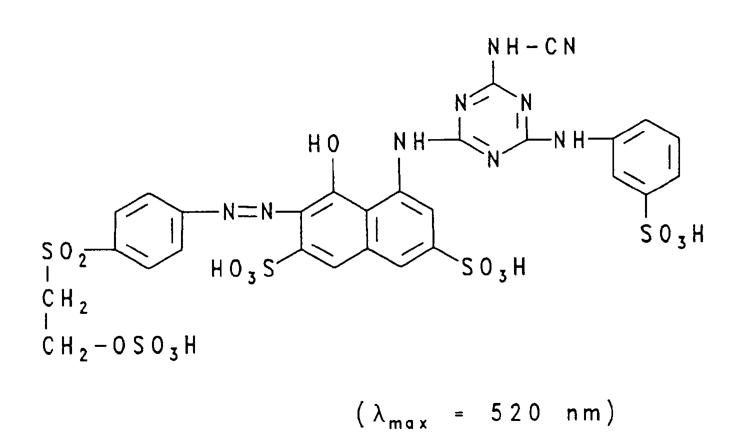
zeigt sehr gute faserreaktive Farbstoffeigenschaften und liefert auf den in der Beschreibung genannten Materialien, wie insbesondere Cellulosefasermaterialien, nach den in der Technik für faserreaktive Farbstoffe üblichen Applikations- und Fixierverfahren farbstarke, blaustichig rote Färbungen und Drucke mit guten Echtheitseigenschaften, von denen insbesondere die Licht-, Schweißlicht- und Chlorechtheiten hervorgehoben werden. Er eignet sich darüberhinaus insbesondere sehr gut für den Ätzdruck, indem rein weiße Muster in der blaustichig roten Fondfärbung erhalten werden.

### Beispiel 1a

Zur Herstellung des Farbstoffes des Beispieles 1 auf einem anderen Synthesewege versetzt man eine Suspension von 46 Teilen Cyanurchlorid in 400 Teilen Wasser bei 0°C mit 10,7 Teilen Cyanamid und führt die Umsetzung bei einem pH-Wert zwischen 8 und 8,5 durch stetige Zugabe von Natronlauge durch. Danach gibt man 44,5 Teile Anilin-3-sulfonsäure hinzu und führt die zweite Kondensationsreaktion bei einer Temperatur von etwa 0°C und einem pH-Wert zwischen 2 und 2,5 durch. Nach etwa zwei Stunden gibt man 73 Teile 1-Amino-8-hydroxy-naphthalin-3,6-disulfonsäure hinzu. Die dritte Kondensationreaktion erfolgt bei einem pH-Wert von 3 und einer Temperatur von 60°C.

Nach Abkühlen dieses Ansatzes auf 20°C gibt man zu dieser Lösung der Kupplungskomponente die auf üblichem Wege hergestellte wäßrige Diazoniumsalzsuspension aus 72,1 Teilen 4-(β-Sulfatoethylsulfonyl)-anilin hinzu und führt die Kupplungsreaktion bei einem pH-Wert von 2 bis 2,5 durch.

Der erfindungsgemäße Farbstoff wird gemäß den Angaben des Beispieles 1 isoliert. Er besitzt dieselben guten Farbstoffeigenschaften.

### Beispiel 2

Man versetzt 36 Teile 1-Amino-8-naphthol-3,6-disulfonsäure in 800 Teilen Wasser bei einer Temperatur von 0°C und einem pH-Wert von 2 langsam innerhalb von fünf Minuten mit 23 Teilen Cyanurchlorid. Der pH-Wert von 2 wird mit konzentrierter Natronlauge während zwei Stunden gehalten. Anschließend gibt man unter weiterem Rühren 17,8 Teile Anilin-3-sulfonsäure unter Einhaltung eines pH-Wertes von 2,5 und einer Temperatur von 60 bis 80°C hinzu und rührt noch einige Zeit nach, bis dünnschichtchromatographisch kein Ausgangsmaterial mehr nachweisbar ist. Anschließend gibt man 4,25 Teile Cyanamid hinzu und führt die Kondensationsreaktion bei einer Temperatur von 50 bis 60°C und einem pH-Wert von 6,5 während etwa 4 Stunden durch.

Die so hergestellte Kupplungskomponente wird in der Syntheselösung mit der auf üblichem Wege hergestellten wäßrigen, salzsauren Lösung des Diazoniumsalzes von 51,1 Teilen 2-Amino-6-(β-sulfatoethylsulfonyl)-naphthalin-1-sulfonsäure versetzt, und die Kupplungsreaktion wird bei 15 bis 30°C und einem pH-Wert von 6 durchgeführt.

Der erhaltene erfindungsgemäße Farbstoff wird nach Klären der Syntheselösung bei einem pH-Wert von 5,5 durch Sprühtrocknung als Alkalimetallsalzes (Natriumsalzes) isoliert. Er besitzt, in Form der freien Säure geschrieben die Formel 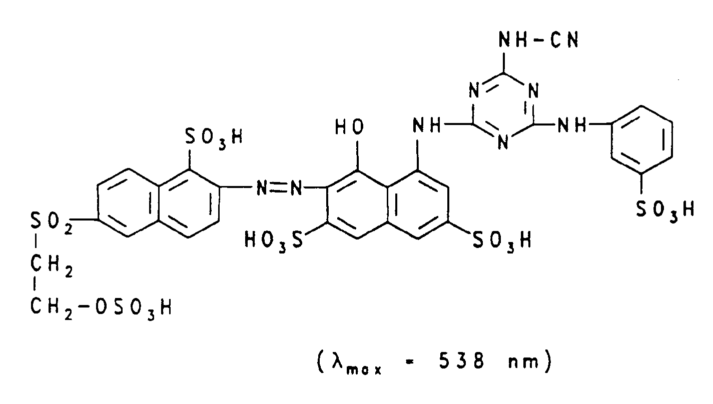
und zeigt sehr gute faserreaktive Farbstoffeigenschaften. Nach den in der Technik für faserreaktive Farbstoffe üblichen Applikation- und Fixierverfahren liefert er beispielsweise auf Cellulosefasermaterialien, wie Baumwolle, farbstarke, blaustichig rote, echte Färbungen und Drucke bei einem hohen Fixiergrad. Darüberhinaus ist der Farbstoff sehr gut in den Ätz- und Reservedruckverfahren einsetzbar.

### Beispiel 3

19 Teile Cyanurchlorid werden in 300 Teilen Wasser suspendiert. 4,4 Teile Cyanamid werden hinzugegeben, und der pH-Wert wird während der Umsetzung mittels wäßriger Natronlauge zwischen 8 und 9 gehalten. Anschließend gibt man 58,3 Teile 1-[4′-(β-Sulfatoethylsulfonyl)-phenyl]-3-carboxy-4-(5′′-amino-2′′-sulfophenyl)-azo-5-pyrazolon hinzu und führt die Umsetzung bei einem pH-Wert von 4 und einer Temperatur von 40°C durch. Danach gibt man 17,8 Teile Anilin-3-sulfonsäure hinzu, erwärmt den Ansatz auf 85°C und rührt ihn unter Einhaltung eines pH-Wertes von 3,5 bis 4 zur vollständigen Kondensationreaktion weiter.

Der gebildete erfindungsgemäße Azofarbstoff wird in Form seines Alkalimetallsalzes (Natriumsalzes) durch Eindampfen der Syntheselösung unter reduziertem Druck oder durch Sprühtrocknung isoliert. Er besitzt, in Form der freien Säure geschrieben, die Formel 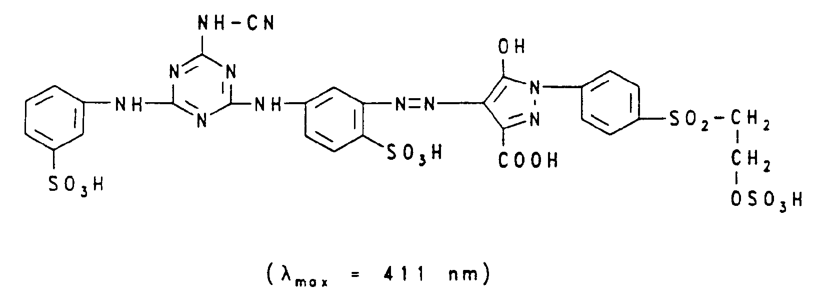
und weist sehr gute faserreaktive Farbstoffeigenschaften auf. Er färbt gemäß den bekannten Anwendungstechniken die in der Beschreibung genannten Materialien, wie insbesondere Cellulosefasermaterialien, in farbstarken, gelben Tönen mit guten Echtheitseigenschaften.

### Beispiel 4

Eine Suspension von 19 Teilen Cyanurchlorid in 200 Teilen Eiswasser wird mit 18,8 Teilen 1,3-Diaminobenzol-4-sulfonsäure versetzt. Man rührt den Ansatz zunächst etwa zwei Stunden bei 0 bis 5°C und bei einem pH-Wert von 2,5 und danach etwa 30 Minuten bei 0 bis 5°C und einem pH-Wert von 4. Sodann gibt man 4,4 Teile Cyanamid hinzu, stellt mittels Natronlauge einen pH-Wert von 10 ein, erhöht die Temperatur langsam auf 50 bis 60°C und rührt noch etwa 1,5 Stunden unter Einhaltung eines pH-Wertes von 10 und einer Temperatur von 50 bis 60°C weiter. Sodann stellt man mittels wäßriger Salzsäure einen pH-Wert von 7 ein, gibt 20 Volumenteile einer wäßrigen 5n-Natriumnitrit-Lösung hinzu und diazotiert durch langsame Zugabe dieses Ansatzes in ein Gemisch aus 50 Volumenteilen konzentrierter Salzsäure und 600 Teilen Eis. Man rührt noch etwa 2 Stunden nach und zerstört in üblicher Weise einen eventuellen Überschuß an salpetriger Säure mittels Amidosulfonsäure.

Die erhaltene Diazoniumsalzsuspension wird sodann in eine wäßrige Lösung des Natriumsalzes von 60 Teilen-4-Hydroxy-5-amino-6-[4′-(β-sulfatoethylsulfonyl)-phenylazo]-naphthalin-2,7-disulfonsäure gegeben. Man führt die Kupplungsreaktion bei 0 bis 10°C und einem pH-Wert von 6 bis 7 durch, gibt anschließend 17,8 Teile Anilin-3-sulfonsäure hinzu und führt die Kondensationsreaktion bei 85°C und einem pH-Wert von 3,5 bis 4 während etwa 2 Stunden durch. Den Ansatz klärt man anschließend mit wenig Kieselgur bei etwa 40°C, filtriert ihn und dampft das Filtrat ein.

Man erhält ein schwarzes, elektrolythaltiges Pulver des Alkalimetallsalzes (Natriumsalzes) der Disazoverbindung der Formel 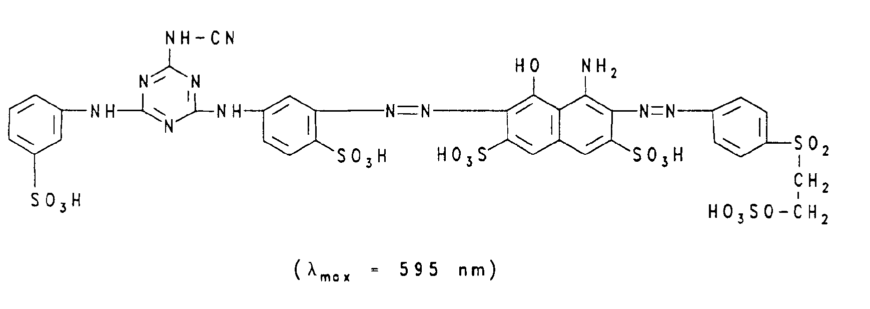
Sie zeigt sehr gute faserreaktive Farbstoffeigenschaften und färbt beispielsweise Baumwolle in kräftigen, marineblauen Tönen.

### Beispiele 5 bis 160

In den nachfolgenden Tabellenbeispielen sind weitere erfindungsgemäße Azofarbstoffe mit Hilfe der Komponenten entsprechend der allgemeinen Formel (A) 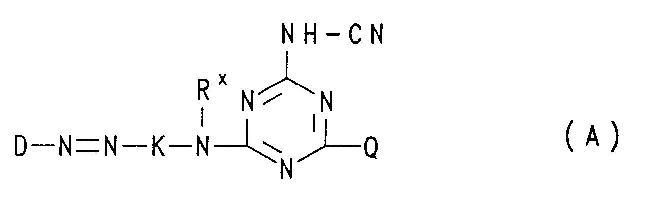
beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diazokomponente D-NH₂, der Kupplungskomponente H-K-NR^{x}H, einem Halogentriazin, Cyanamid und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Tönen in hoher Farbstärke und mit guten Echtheiten und sind darüber hinaus sehr gut für den Ätzdruck geeignet.

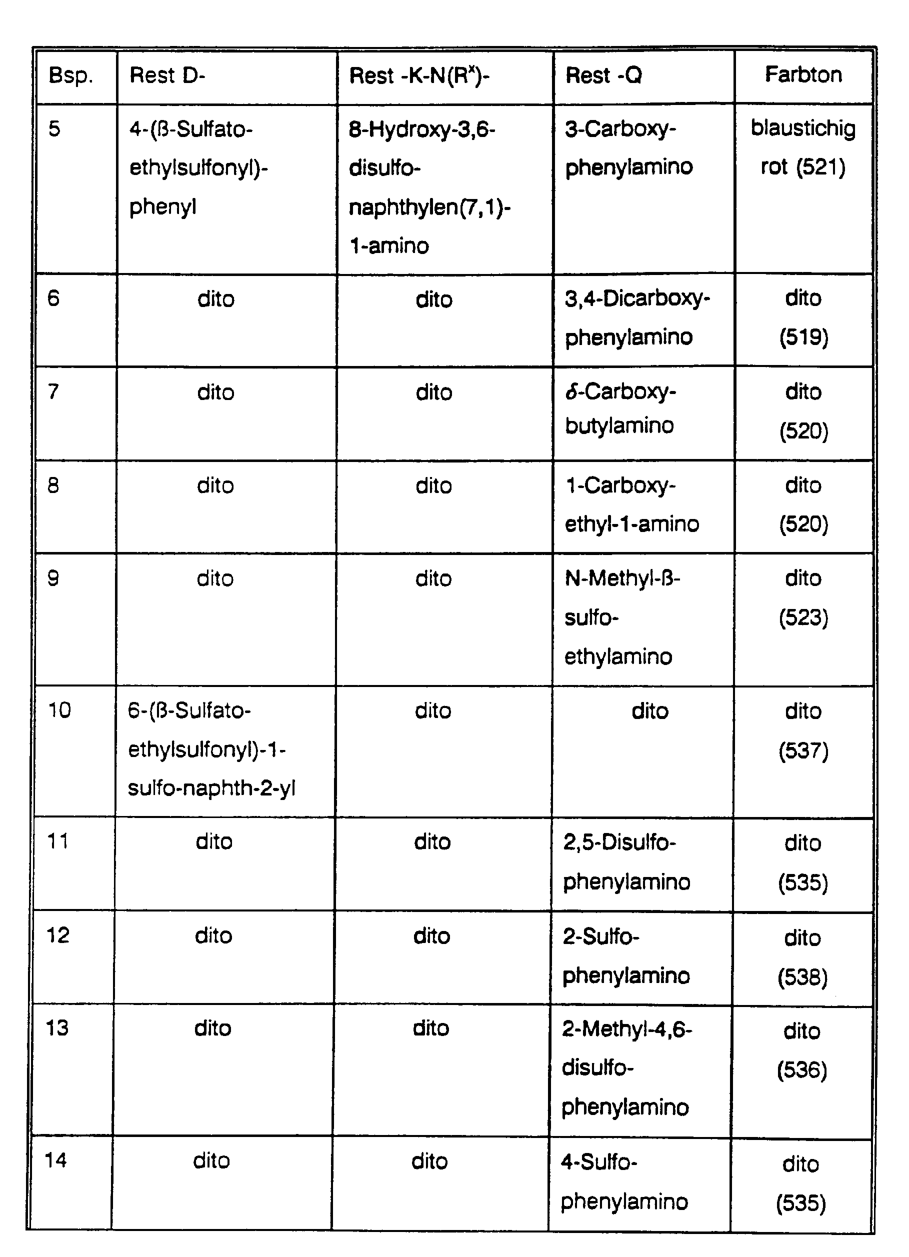

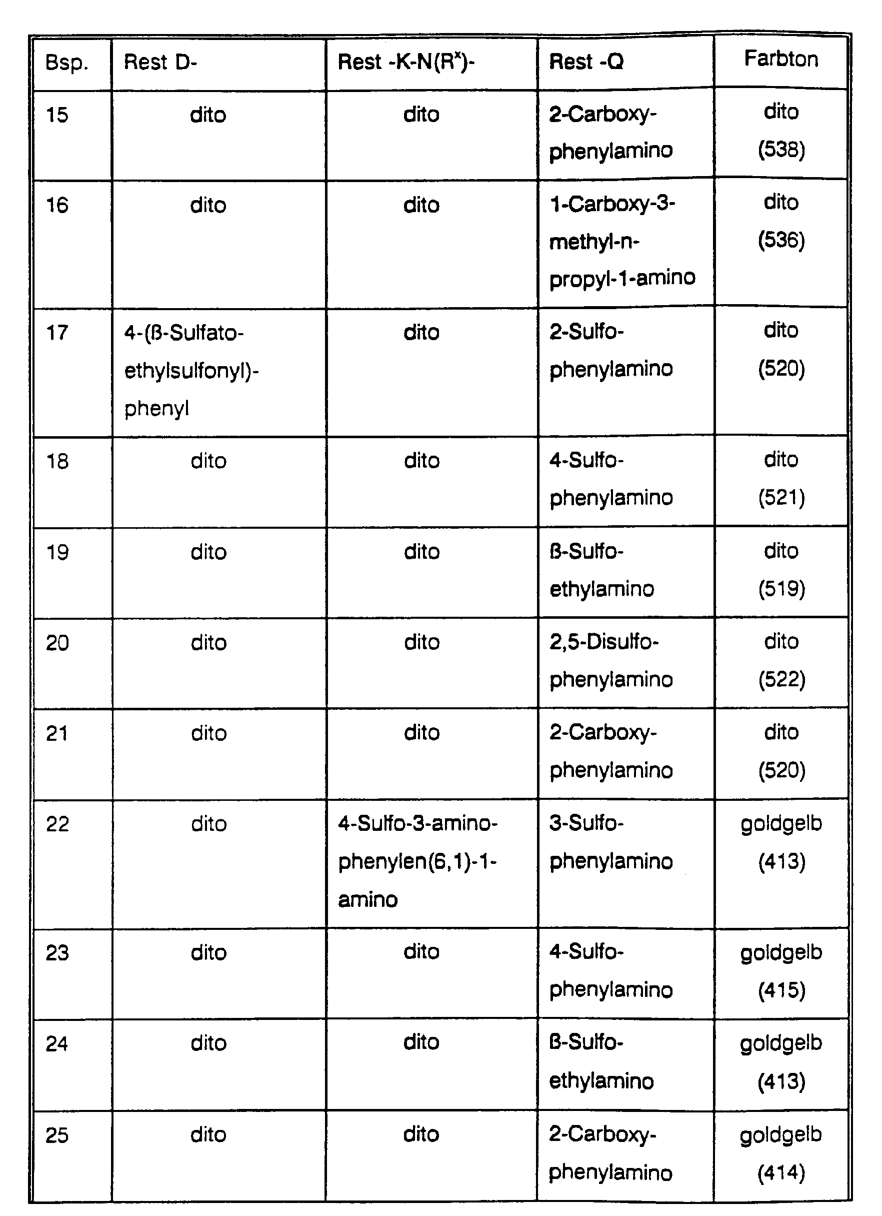

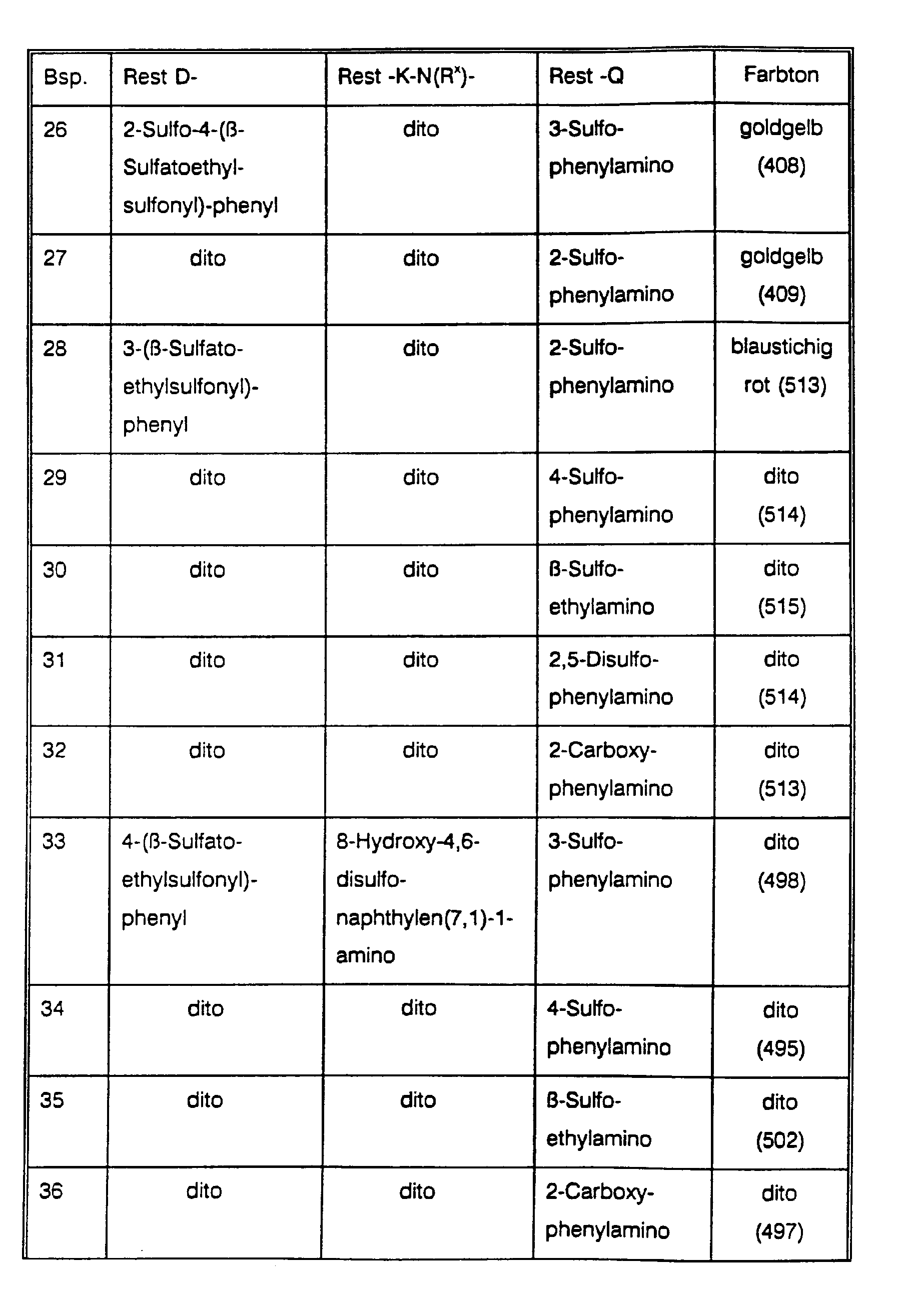

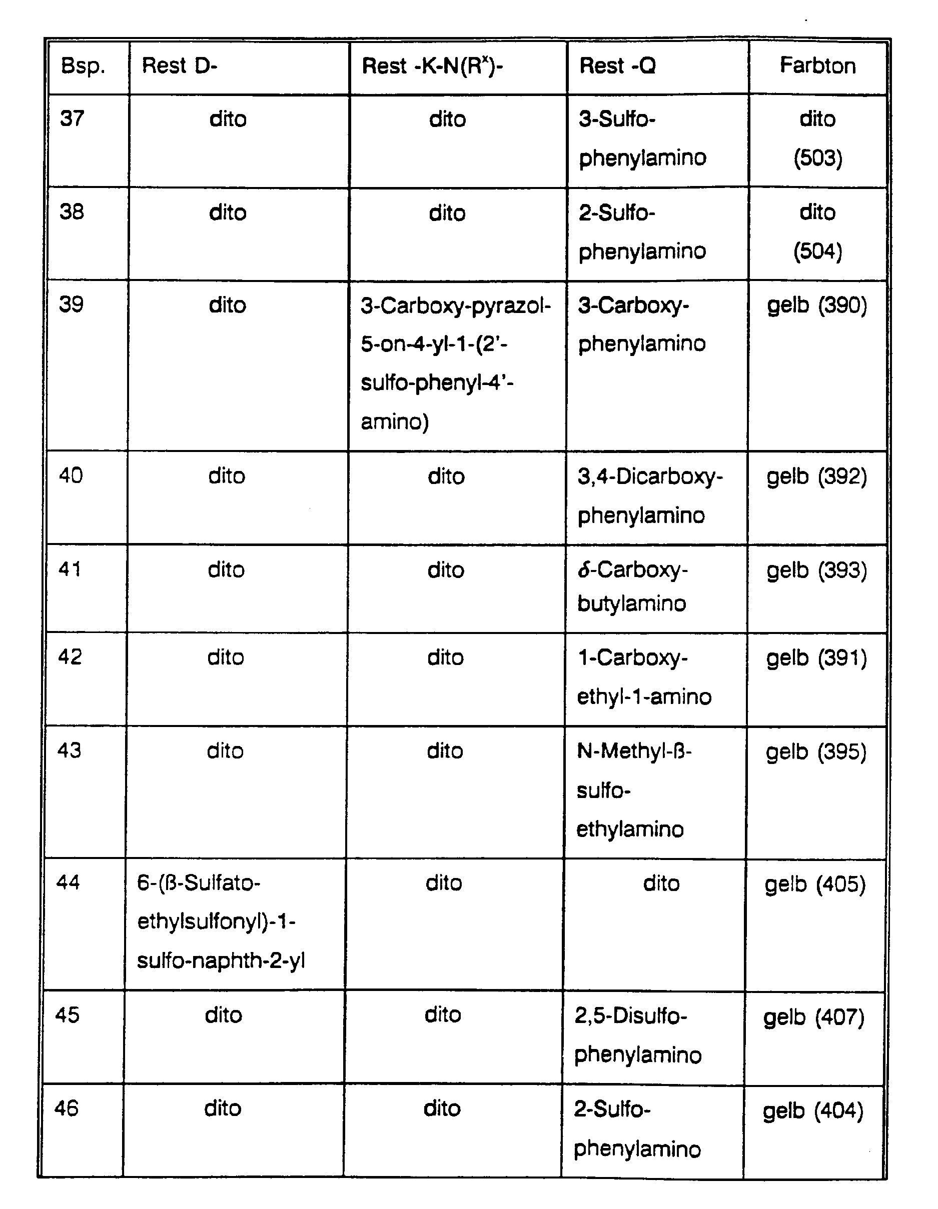

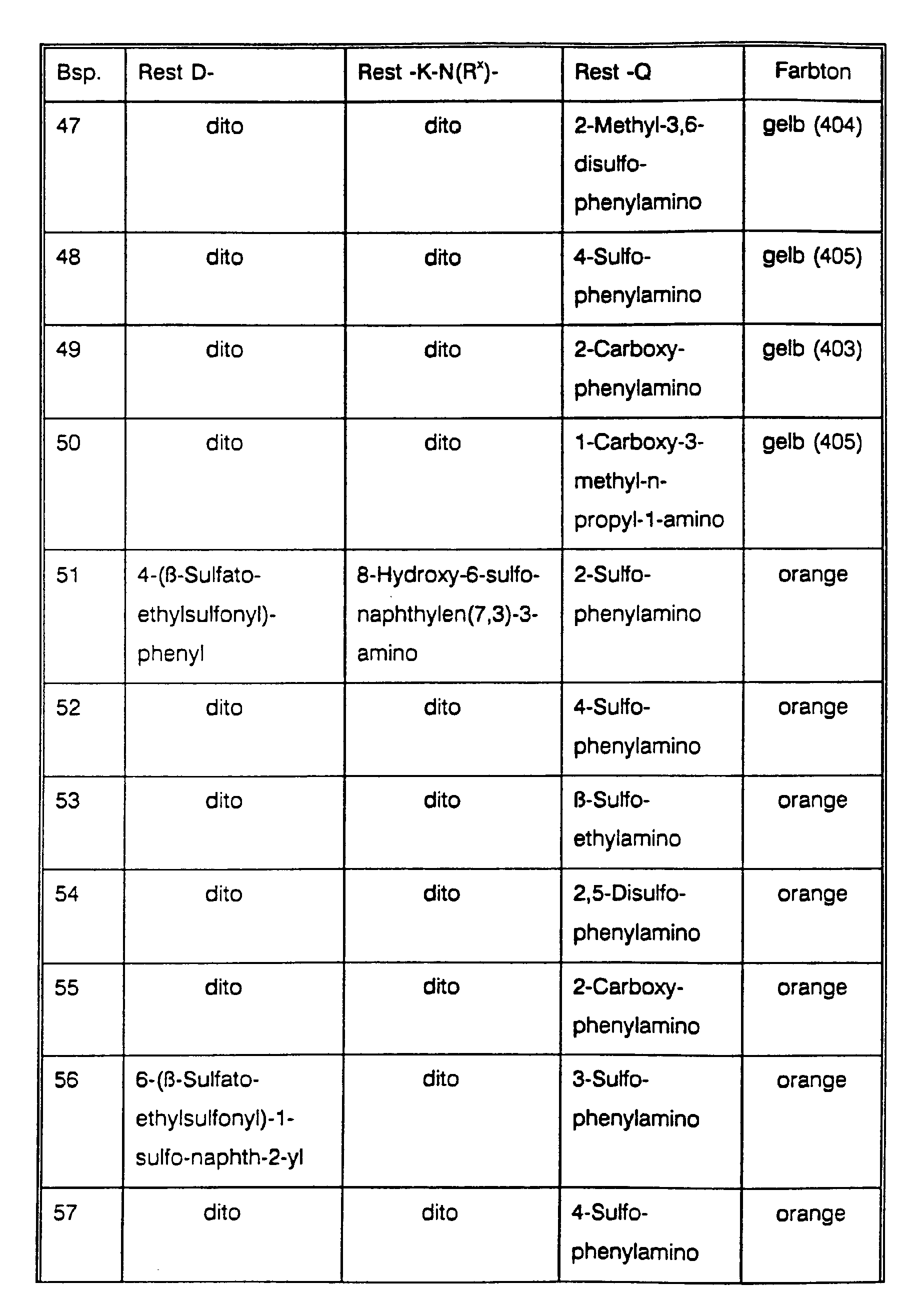

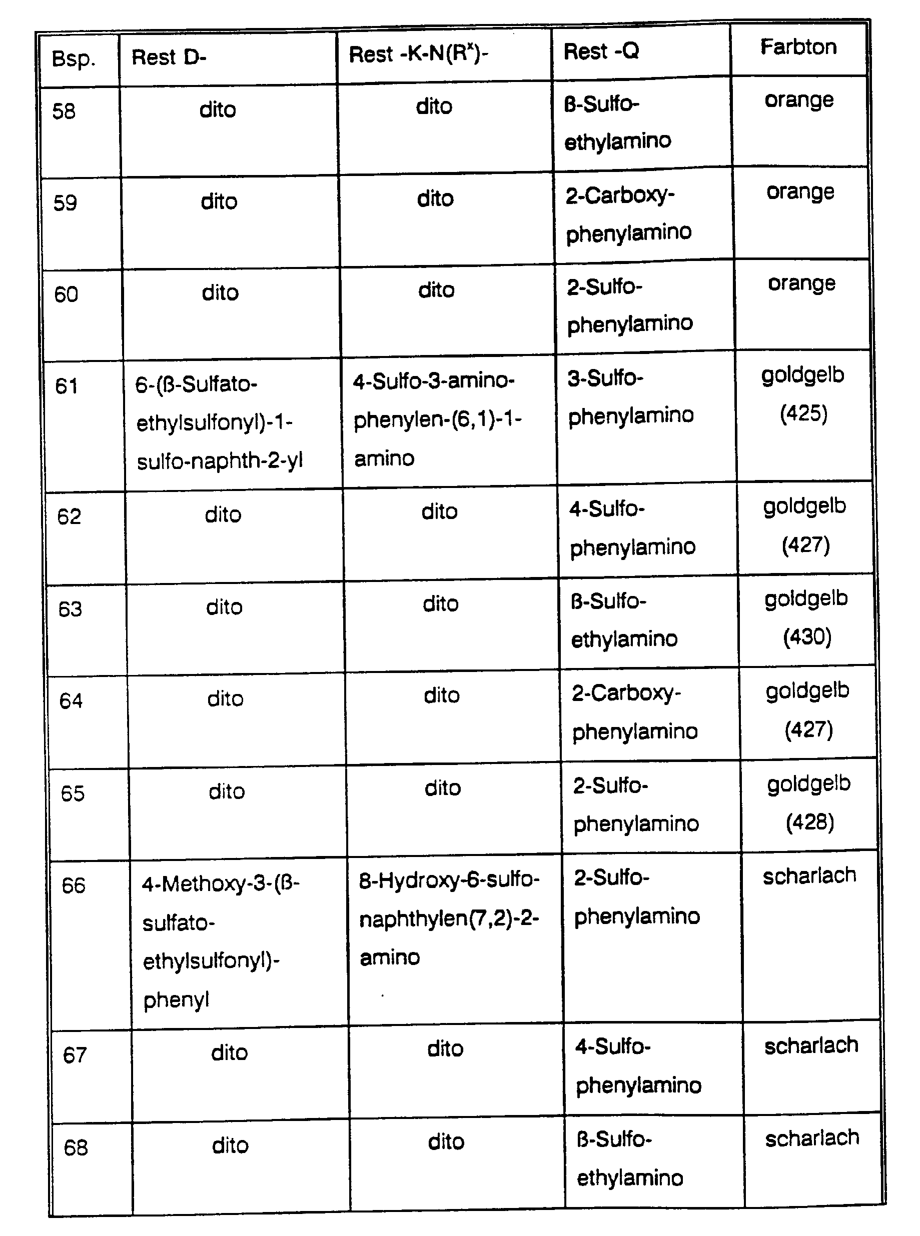

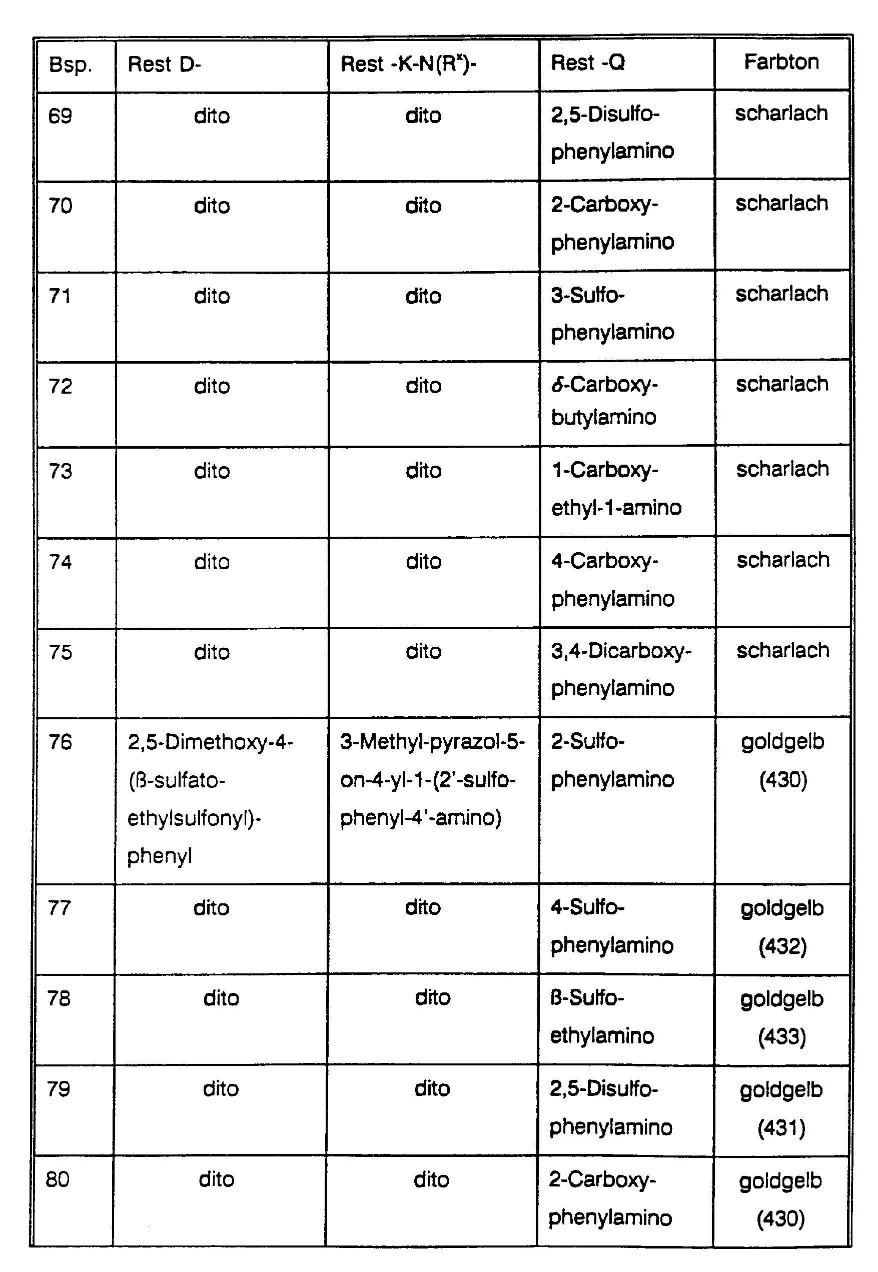

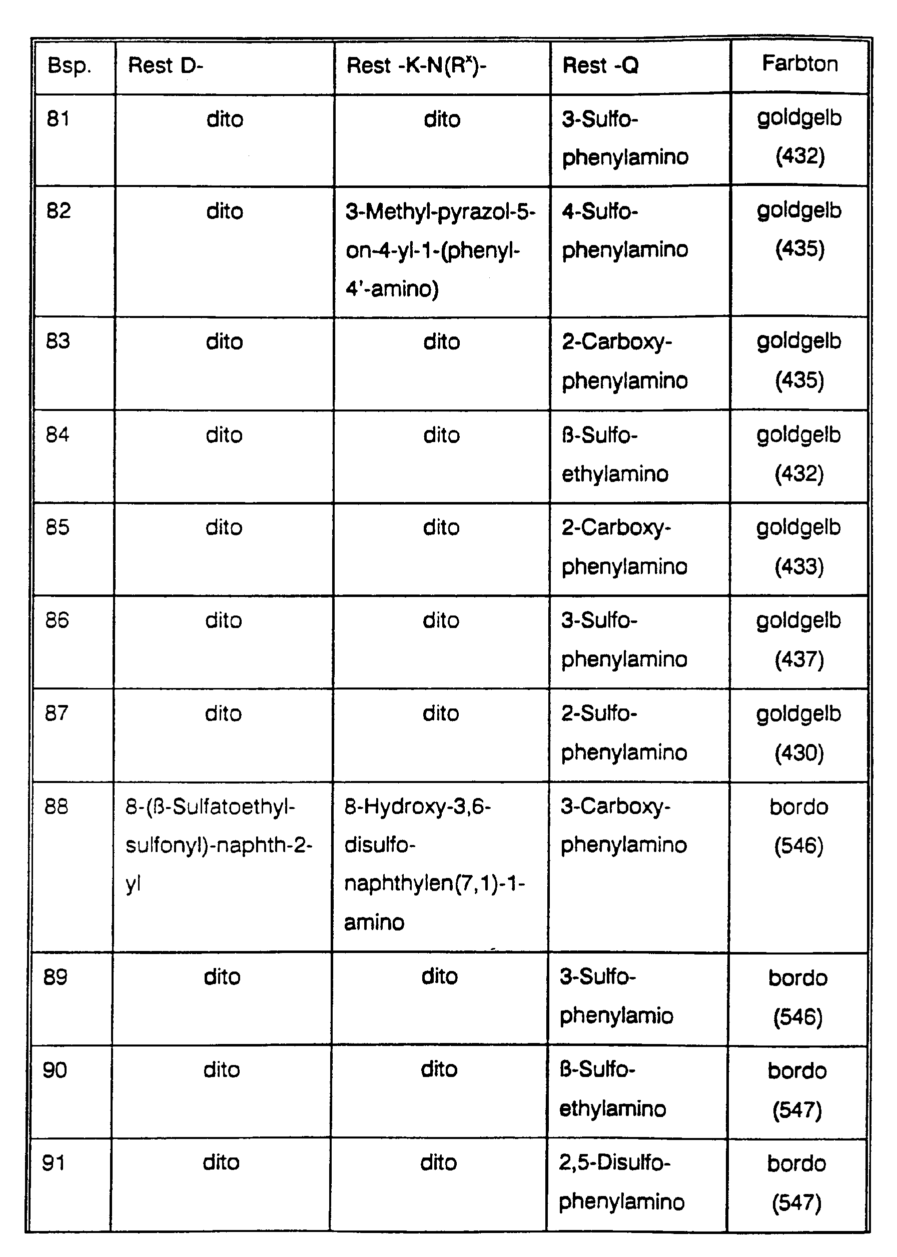

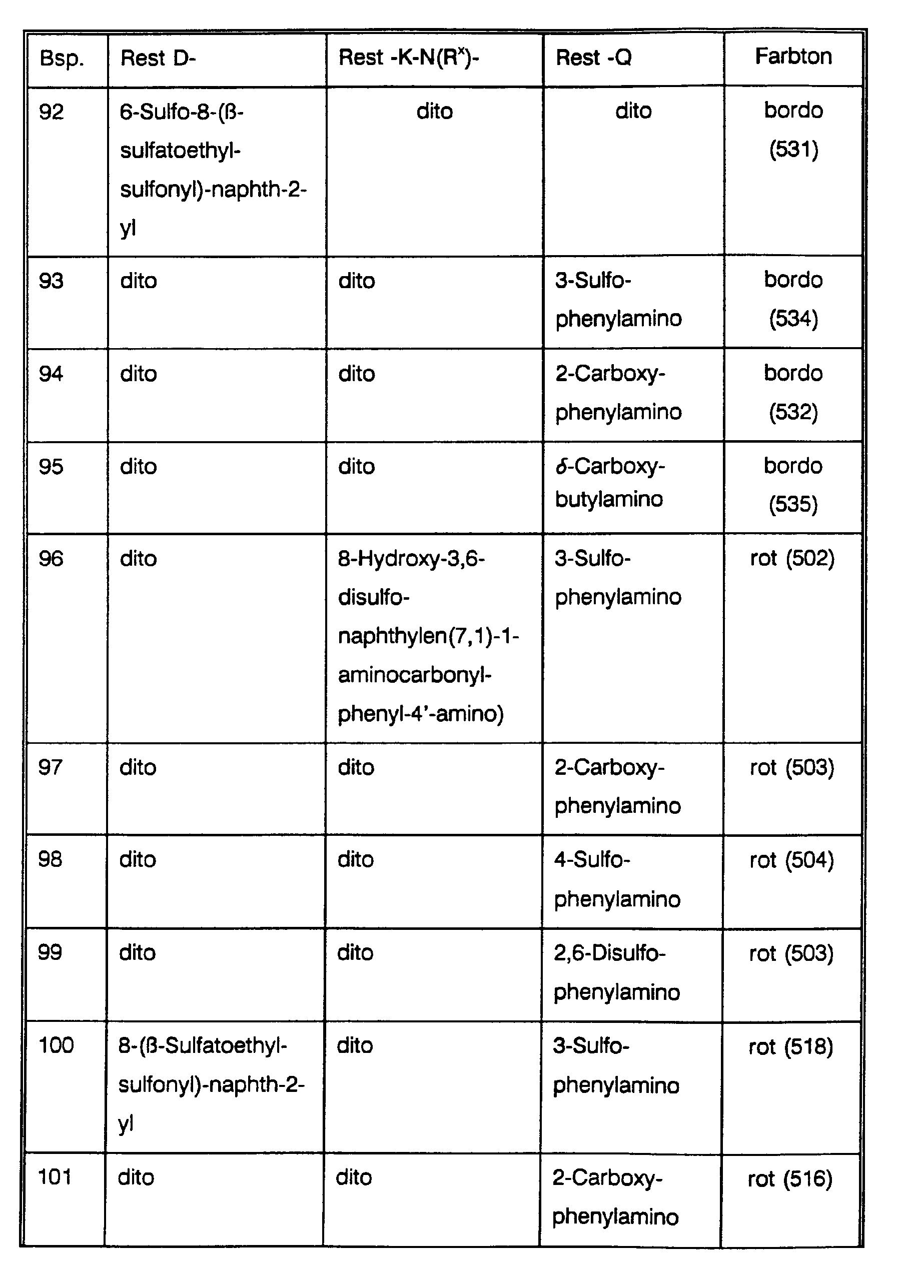

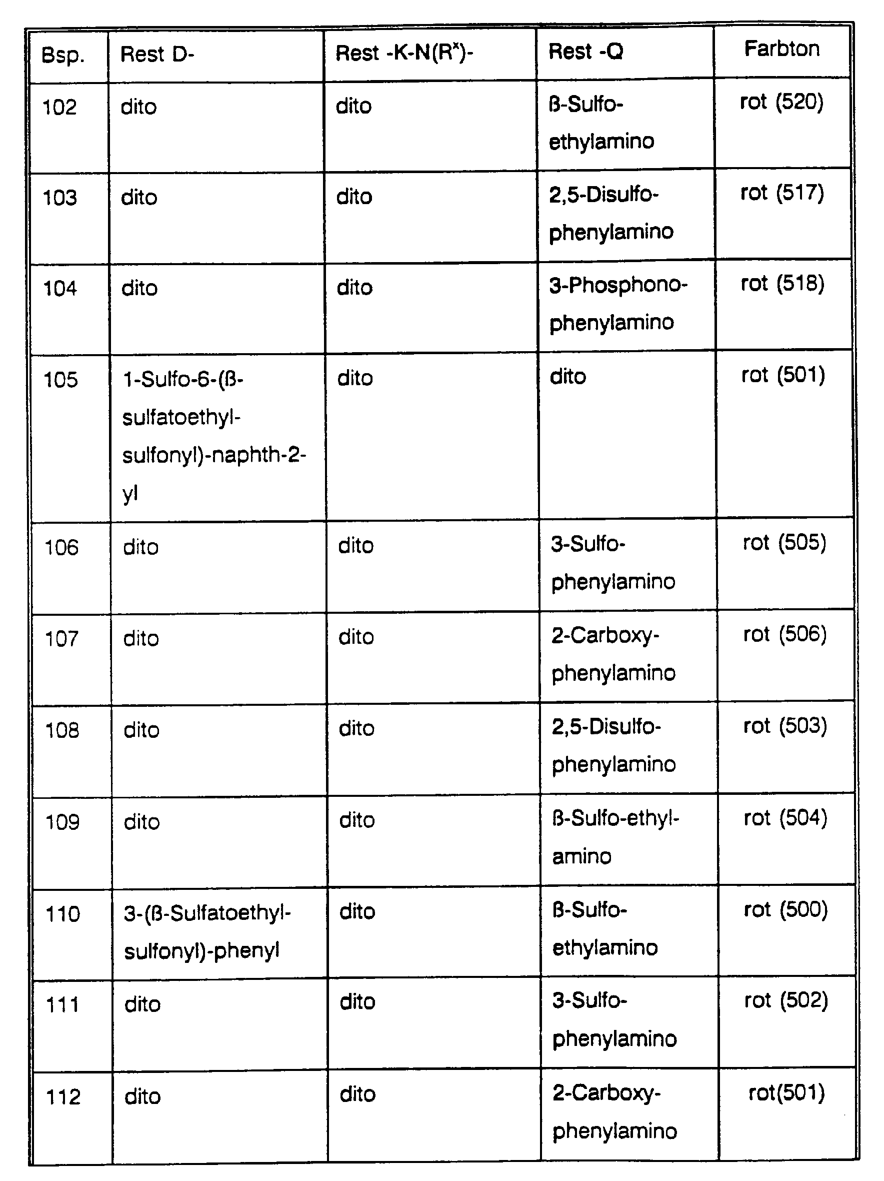

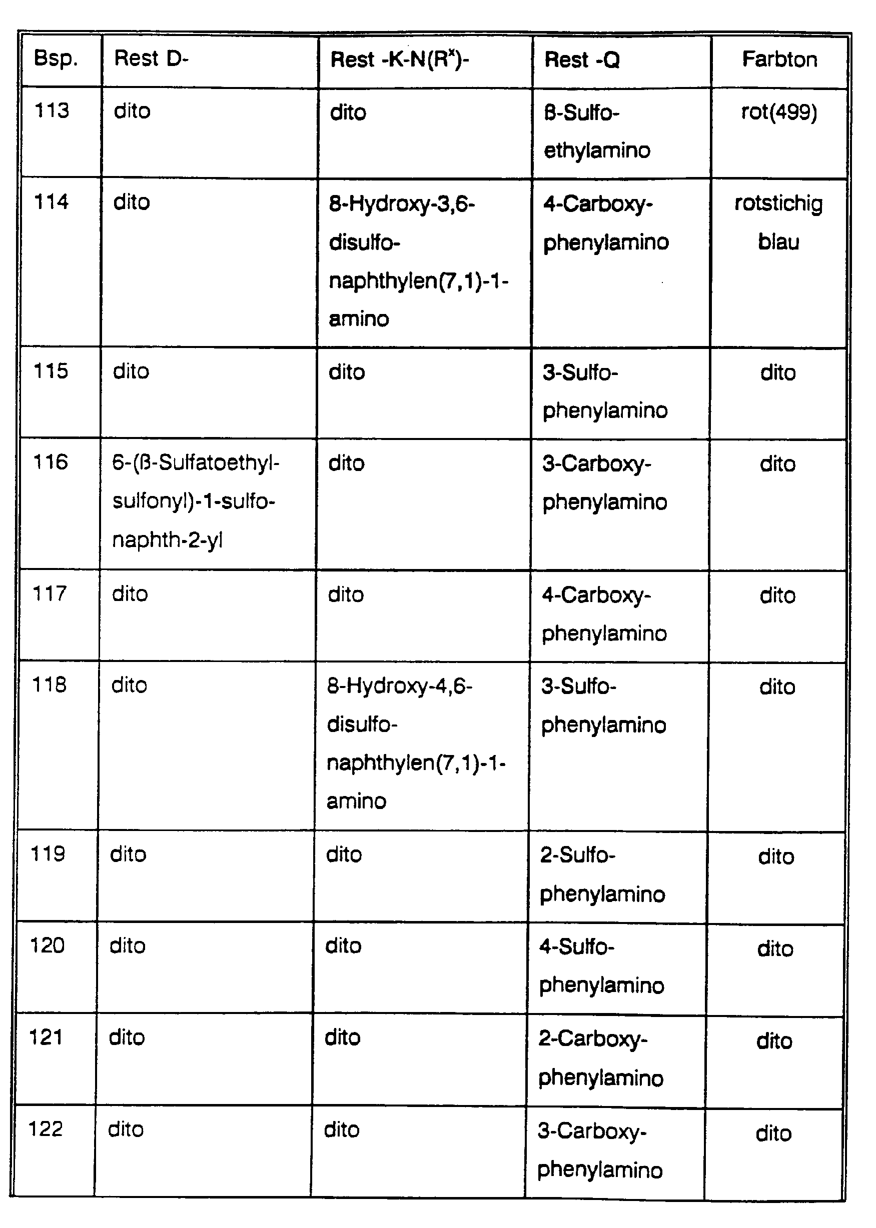

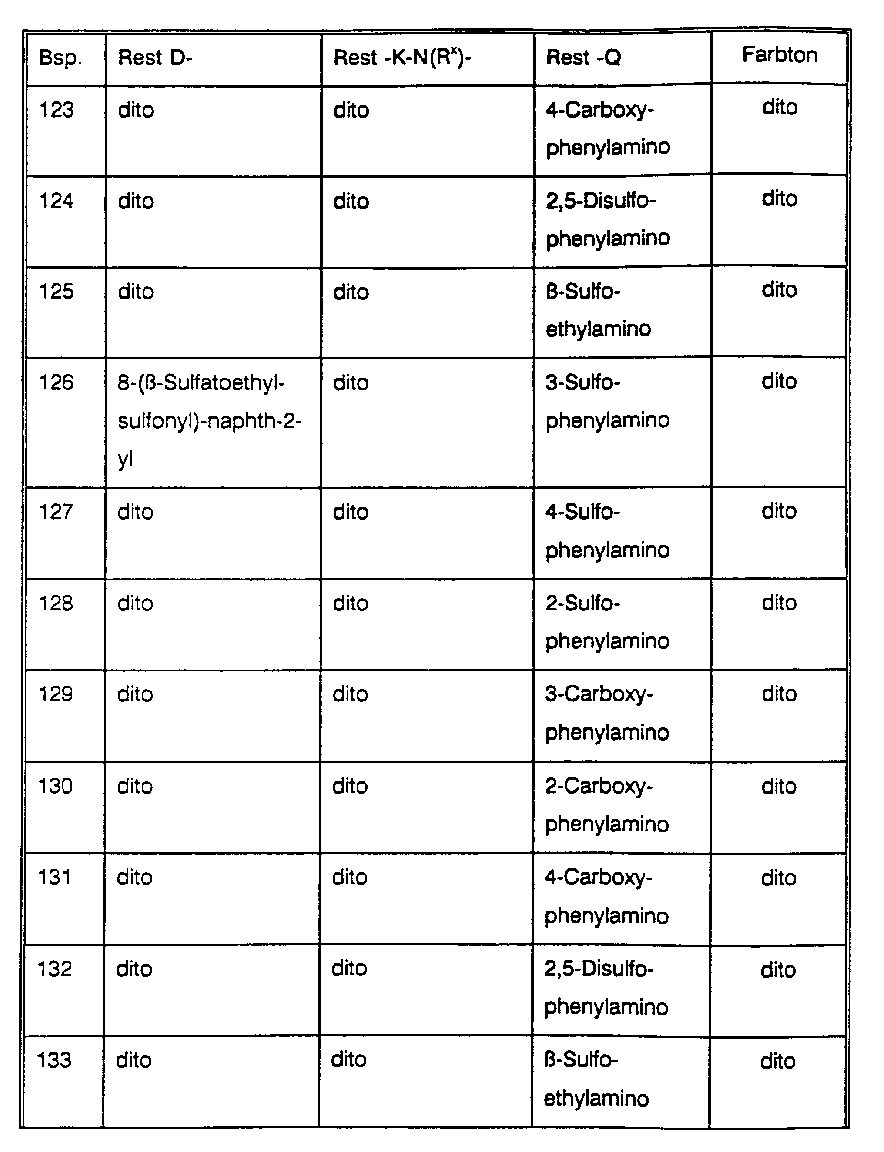

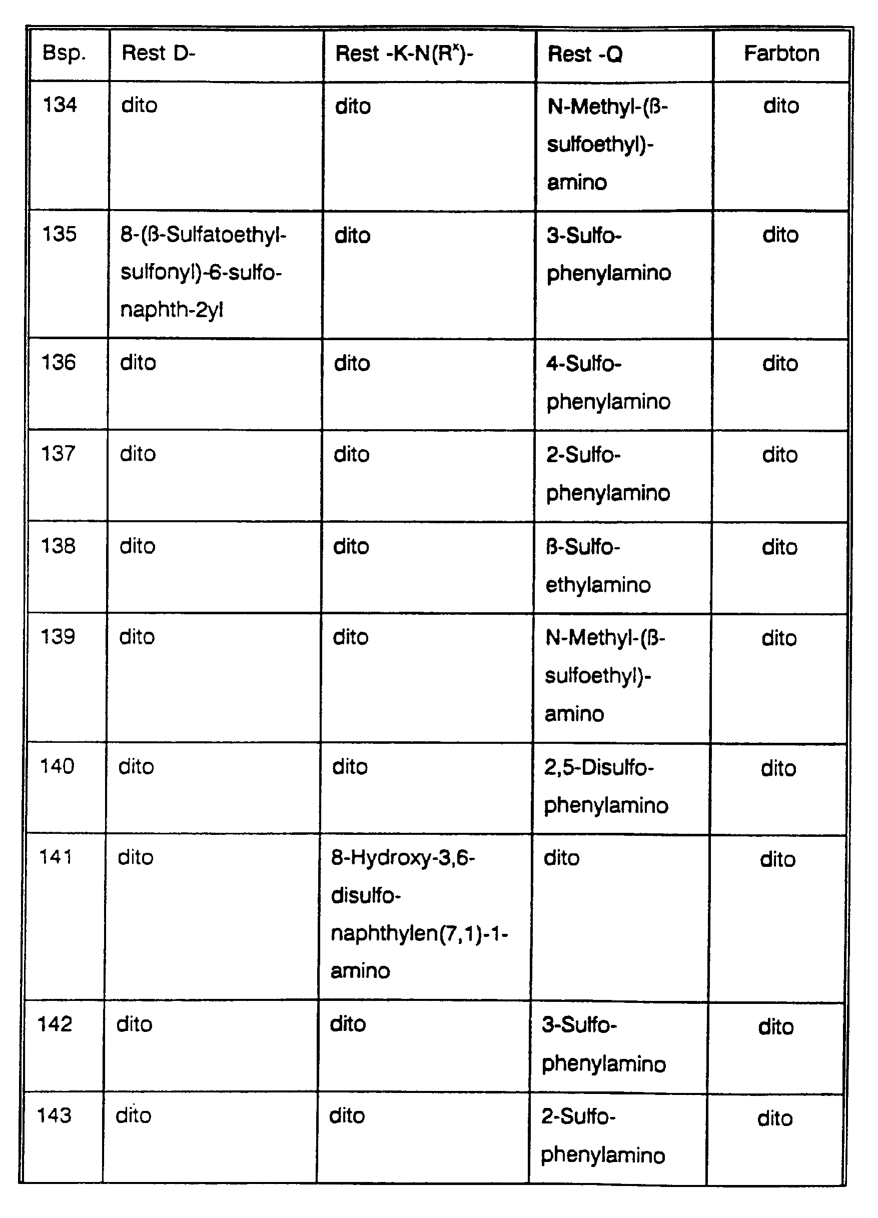

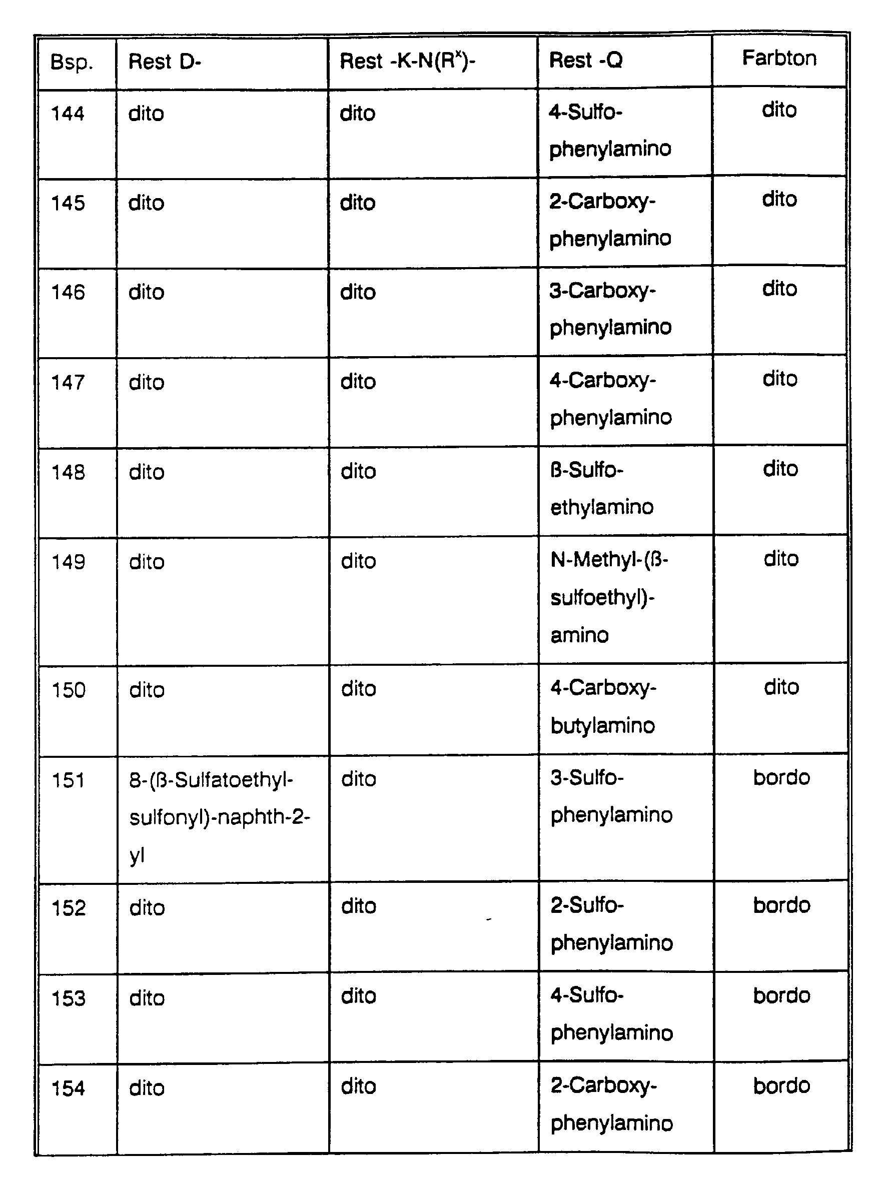

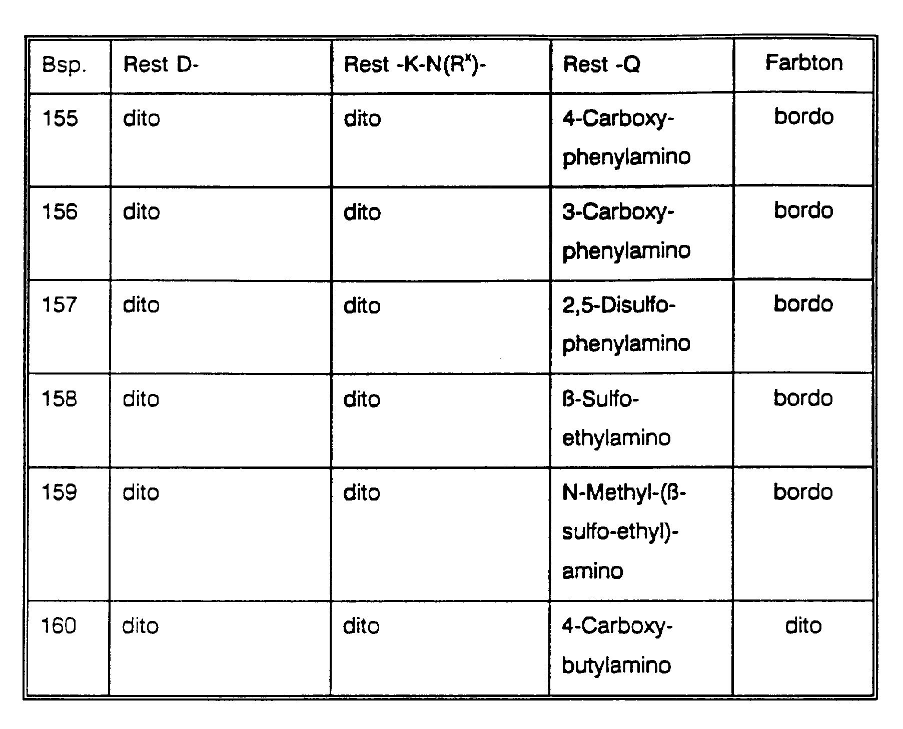

### Beispiele 161 bis 166

In den nachfolgenden Tabellenbeispielen sind weitere erfindungsgeäße Azofarbstoffe mit Hilfe der Komponenten entsprechend der allgemeinen Formel (B) 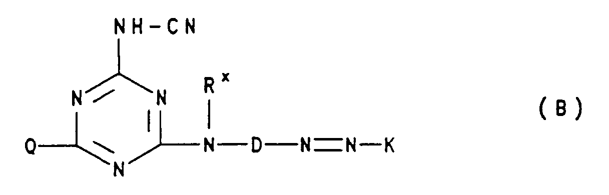
beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (B) ersichtlichen Komponenten (wie einem Diaminophenylen oder -naphthylen der Formel HR^{x}N-D-NH₂, der Kupplungskomponente H-K, einem Halogentriazin, Cyanamid und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Tönen in hoher Farbstärke und mit guten Echtheiten und eignen sich darüber hinaus sehr gut im Ätz- und Reservedruck.

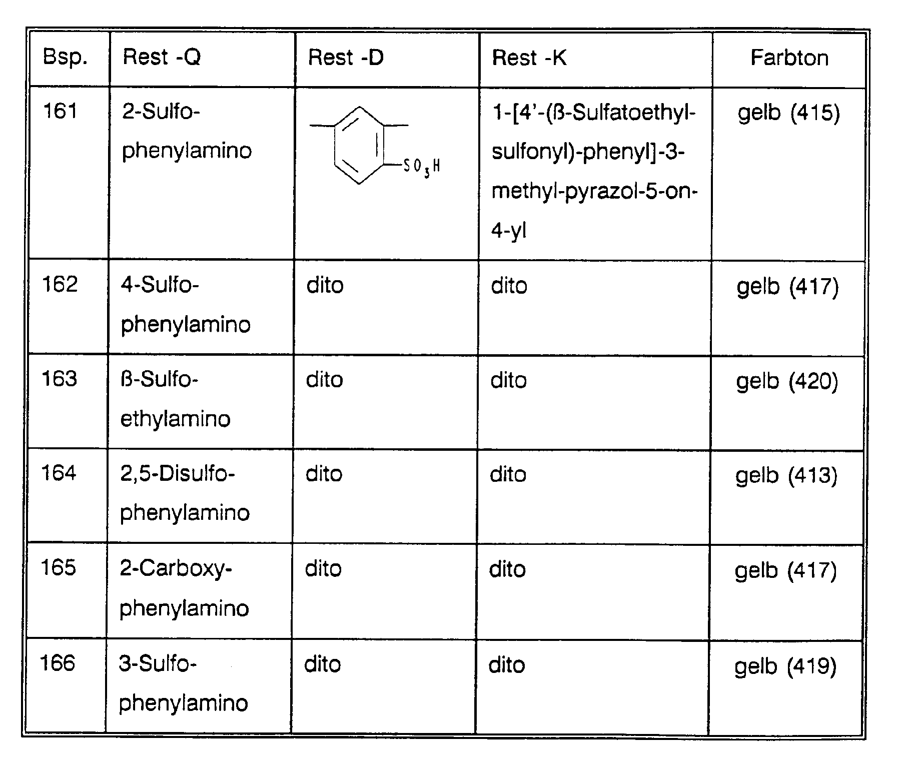

### Beispiel 167

98,5 Teile der Kupferphthalocyaninverbindung der Formel 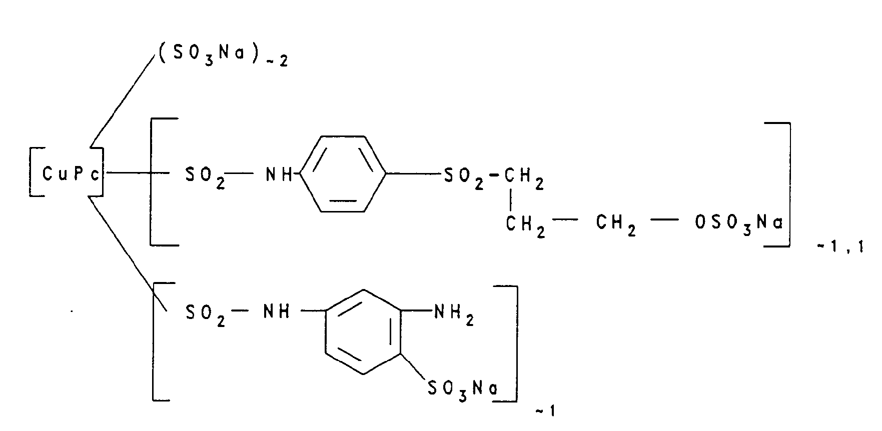
werden in einer Mischung aus 600 Teilen Eis und 600 Teilen Wasser homogen verrührt, und diese wird mit Natronlauge auf einen pH-Wert von 7 eingestellt. Man gibt 19 Teile Cyanurchlorid, in wenig Aceton gelöst, hinzu und führt unter weiterem Rühren die Kondensationsreaktion bei 0 bis 5°C und einem pH-Wert von 3,5 bis 4 durch. Sodann gibt man 4,4 Teile Cyanamid hinzu, erhöht die Temperatur langsam auf 50 bis 60°C und stellt mittels Natronlauge den pH-Wert 10 ein, rührt bis zur Beendigung dieser zweiten Kondensationsreaktion weiter und neutralisiert anschließend mit wäßriger Salzsäure bis auf einen pH-Wert von 5. Man gibt 17,8 Teile Anilin-3-sulfonsäure hinzu und rührt den Ansatz etwa 2,5 Stunden bei 80 bis 90°C und einem pH-Wert von 3,5 bis 4. Die Syntheselösung wird bei einem pH-Wert von 5,5 noch in der Wärme mit Kieselgur geklärt, und das Filtrat wird unter reduziertem Druck eingedampft.

Man erhält ein blaues elektrolythaltiges Pulver des Alkalimetallsalzes (Natriumsalzes) der Verbindung der Formel

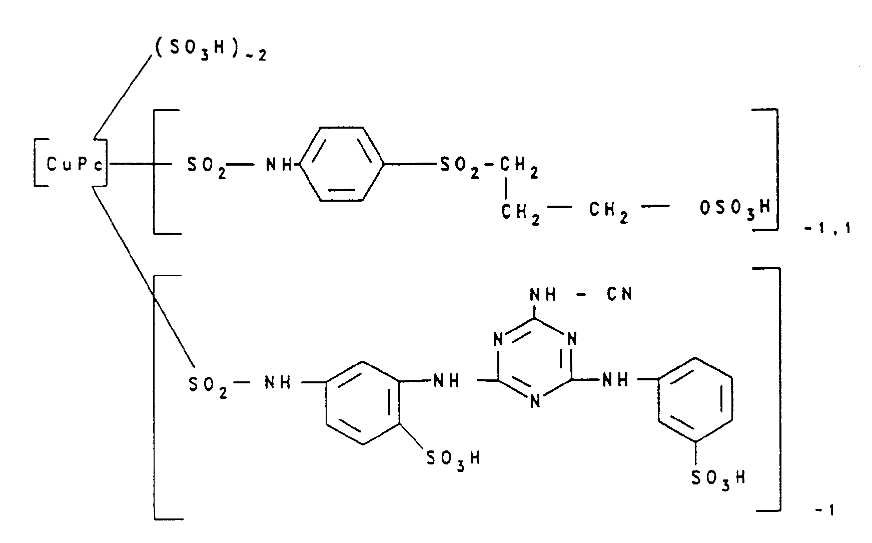

Der erfindungsgemäße Kupferphthalocyaninfarbstoff zeigt im sichtbaren Bereich ein Absorptionsmaximum bei 672 nm; sie besitzt sehr gute faserreaktive Farbstoffeigenschaften und färbt die in der Beschreibung genannten Materialien, wie insbesondere Cellulosefasermaterialien, nach den üblichen Applikations- und Fixierverfahren in farbstarken, echten, türkisblauen Tönen.

## Patentansprüche

1. Farbstoff entsprechend der allgemeinen Formel (1) 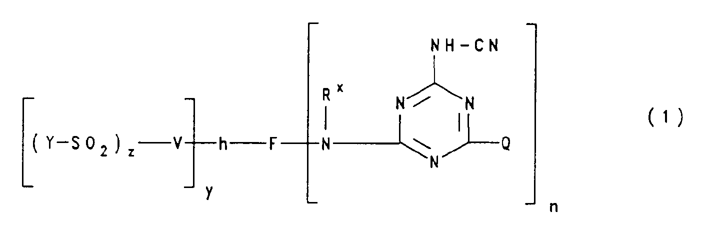 in welcher bedeuten:
F ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;
R^{x} ist ein Wasserstoffatom oder eine Alkylgruppe von 1 bis 4 C-Atomen, die durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;
n ist die Zahl 1 oder 2, bevorzugt 1;
Q ist eine Gruppe der allgemeinen Formel (2) 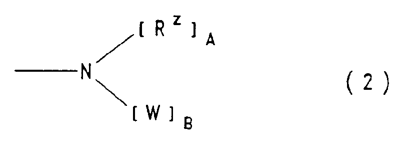 in welcher
R^{z} ein Wasserstoffatom oder eine Alkylgruppe von 1 bis 4 C-Atomen ist, die durch Halogen, Hydroxy, Cyano, Alkoxy von 1 bis 4 C-Atomen, Carboxy, Sulfamoyl, Sulfo oder Sulfato oder durch einen gegebenenfalls durch Substituenten aus der Gruppe Halogen, Alkoxy von 1 bis 4 C-Atomen, Alkyl von 1 bis 4 C-Atomen, Sulfo und Carboxy substituierten Phenylrest substituiert sein kann, oder ein Cyclohexylrest oder ein gegebenenfalls durch Substituenten aus der Gruppe Halogen, Alkoxy von 1 bis 4 C-Atomen, Alkyl von 1 bis 4 C-Atomen, Sulfo und Carboxy substituierter Phenylrest ist,
W ein durch 1 bis 4 wasserlöslich-machende Substituenten substituierter Aryl-, Alkylen-aryl-, Arylen-alkyl-, Alkylen-arylen-alkyl- oder Arylen-alkylen-aryl-Rest ist, wobei die Alkylenreste bzw. Alkylreste solche von 1 bis 8 C-Atomen sind und noch durch andere Substituenten substituiert sein können und die Arylenreste bzw. Arylreste gegebenenfalls noch durch andere Substituenten substituierte Phenylen- oder Naphthylenreste bzw. Phenyl- oder Naphthylreste sind, und wobei die Alkylenreste durch 1 oder mehrere Heterogruppen, wie -NH-, -N(R)- mit R gleich Alkyl von 1 bis 4 C-Atomen, das durch Sulfo, Carboxy, Sulfato, Phenyl oder Sulfophenyl substituiert sein kann, -O- , -S- , -SO₂- , -CO- , -SO₂-NH- , -NH-SO₂- , -NH-CO- und -CO-NH- , unterbrochen sein können und die Alkylen- und Arylenanteile bzw. Alkyl- und Arylanteile in den kombinierten Alkyl(en)/Aryl(en)-Resten jeweils durch eine solche Gruppe voneinander getrennt sein können,
A die Zahl Null oder 1 bedeutet und
B die Zahl 1 oder 2 bedeutet,
wobei die Summe von (A + B) gleich der Zahl 2 ist und wobei im Falle von B gleich 2 die Gruppen der Formel -W-(SO₂-Y)_{z} zueinander die gleich Bedeutung oder eine voneinander verschiedene Bedeutung haben können;
V ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder eine durch eine der nachstehenden Heterogruppen unterbrochener Arylen-arylen-Rest, wobei die Alkylenreste solche von 1 bis 8 C-Atomen sind und substituiert sein können und die Arylenreste gegebenenfalls substituierte Phenylen- oder Naphthylenreste sind und wobei die Alkylenreste durch 1 oder mehrere Heterogruppen, wie -NH- , -N(R)- mit R gleich Alkyl von 1 bis 4 C-Atomen, das durch Sulfo, Carboxy, Sulfato, Phenyl oder Sulfophenyl substituiert sein kann, -O- , -S- , -SO₂- , -CO- , -SO₂-NH- , -NH-SO₂- , -NH-CO- und -CO-NH- , unterbrochen sein können und die Alkylen- und Arylenanteile in den kombinierten Alkylen/Arylen-Resten jeweils durch eine solche Heterogruppe voneinander getrennt sein können;
y ist die Zahl 1 oder 2;
z ist die Zahl 1 oder 2;
h ist im Falle von y gleich 2 ein N-Atom oder im Falle von y gleich 1 eine Gruppe der Formel -NH- , -N(R)- mit R einer der obengenannten Bedeutungen, -NH-CO-NH- , -NH-CO- oder -CO-NH- oder eine direkte Bindung;
Y ist die Vinylgruppe oder ist eine Ethylgruppe, die in β-Stellung einen alkalisch eliminierbaren Substituenten enthält, wobei die Gruppe(n) -SO₂-Y direkt oder über einen Alkylenrest von 1 bis 4 C-Atomen oder über eine Alkylaminogruppe von 1 bis 4 C-Atomen an ein aromatisches Kohlenstoffatom von F oder V gebunden sein kann (können).

2. Farbstoff nach Anspruch 1 der Formel 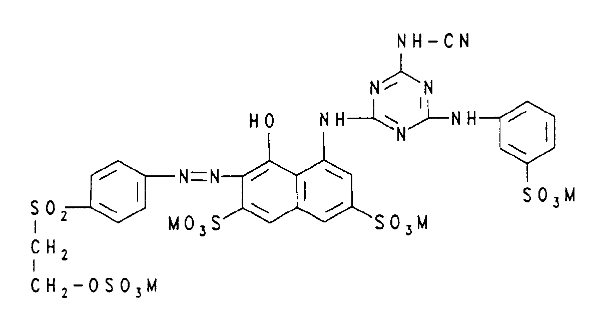 in welcher M Wasserstoff oder ein Alkalimetall ist.

3. Farbstoff nach Anspruch 1 der Formel 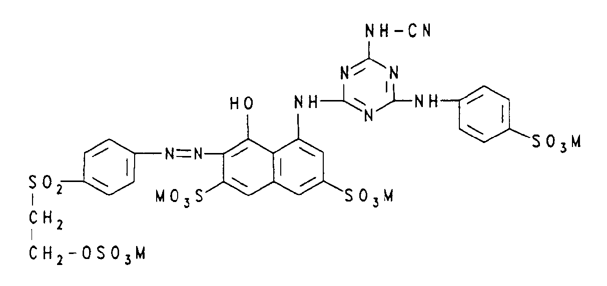 in welcher M Wasserstoff oder ein Alkalimetall ist.

4. Farbstoff nach Anspruch 1 der allgemeinen Formel (12B) 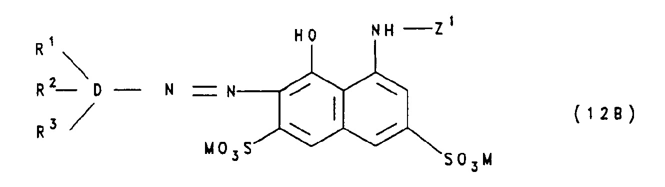 in welcher der Rest R¹R²R³D- der 1-Sulfo-6-(β-sulfatoethylsulfonyl)-naphth-2-yl-Rest ist, Z¹ die 2-Cyanamido-4-(3′-sulfophenyl)-amino-1,3,5-triazin-6-yl- oder die 2-Cyanamido-4-(4′-sulfophenyl)-amino-1,3,5-triazin-6-yl-Gruppe bedeutet und M Wasserstoff oder ein Alkalimetall ist.

5. Farbstoff nach Anspruch 1 der allgemeinen Formel (12A) 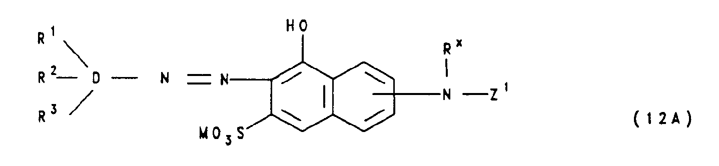 in welcher der Rest R¹R²R³D- der 1-Sulfo-6-(β-sulfatoethylsulfonyl)-naphth-2-yl-Rest ist, R^{x} Wasserstoff ist, die Gruppe -N(R^{x})-Z¹ in 3-Stellung des 8-Naphthol-Restes gebunden ist, Z¹ die 2-Cyanamido-4-(3′-sulfophenyl)-amino-1,3,5-triazin-6-yl- oder die 2-Cyanamido-4-(4′-sulfophenyl)-amino-1,3,5-triazin-6-yl-Gruppe bedeutet und M Wasserstoff oder ein Alkalimetall ist.

6. Farbstoff nach Anspruch 1 der allgemeinen Formel (12A) 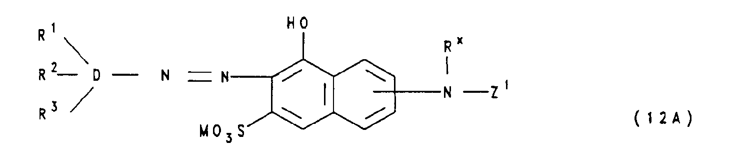 in welcher der Rest R¹R²R³D- der 4-(β-Sulfatoethylsulfonyl)-phenyl-Rest ist, R^{x} Wasserstoff ist, die Gruppe -N(R^{x})-Z¹ in 3-Stellung des 8-Naphthol-Restes gebunden ist, Z¹ die 2-Cyanamido-4-(3′-sulfophenyl)-amino-1,3,5-triazin-6-yl- oder die 2-Cyanamido-4-(4′-sulfophenyl)-amino-1,3,5-triazin-6-yl-Gruppe bedeutet und M Wasserstoff oder ein Alkalimetall ist.

7. Farbstoff nach Anspruch 1 der allgemeinen Formel (12V) 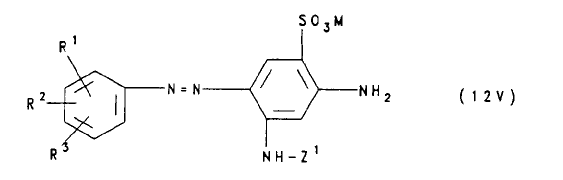 in welcher R¹ in para-Stellung zur Azogruppe an den Benzolkern gebunden ist und die β-Sulfatoethylsulfonyl-Gruppe bedeutet, R² und R³ beide für ein Wasserstoffatom stehen, Z¹ die 2-Cyanamido-4-(3′-sulfophenyl)-amino-1,3,5-triazin-6-yl- oder die 2-Cyanamido-4-(4′-sulfophenyl)-amino-1,3,5-triazin-6-yl-Gruppe bedeutet und M Wasserstoff oder ein Alkalimetall ist.

8. Farbstoff nach Anspruch 1 der allgemeinen Formel (12L) 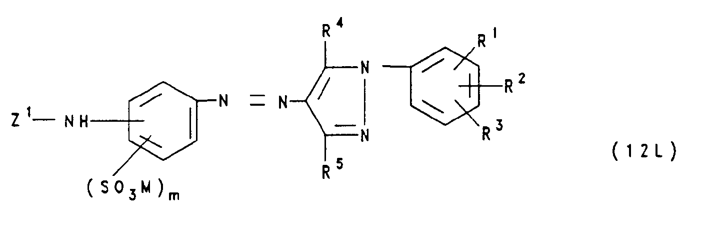 in welcher R⁴ Hydroxy ist, R⁵ Methyl ist, R¹ β-Sulfatoethysulfonyl ist und in para-Stellung zum N-Atom des Pyrazolrestes an den Benzolkern gebunden ist, R² und R³ beide Wasserstoff bedeuten, Z¹ die 2-Cyanamido-4-(3′-sulfophenyl)-amino-1,3,5-triazin-6-yl- oder die 2-Cyanamido-4-(4′-sulfophenyl)-amino-1,3,5-triazin-6-yl-Gruppe bedeutet und M Wasserstoff oder ein Alkalimetall ist, m die Zahl 1 ist und die Gruppe -SO₃M in ortho-Stellung zur Azogruppe an den Benzolkern gebunden ist und die Gruppe Z¹NH- in meta-Stellung zur Azogruppe und in para-Stellung zur Sulfogruppe an den Benzolkern gebunden ist.

9. Verfahren zur Herstellung eines Farbstoffs der allgemeinen Formel (1) von Anspruch 1, dadurch gekennzeichnet, daß man für den jeweiligen Farbstoff des Restes F typische Vorprodukte, von denen mindestens eines eine Gruppe der allgemeinen Formel (3) und mindestens eines eine Gruppe der allgemeinen Formel (5) enthält, miteinander umsetzt, oder daß man eine aminogruppenhaltige Ausgangsverbindung der allgemeinen Formel (55) 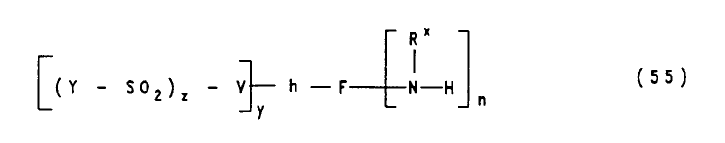 in welcher F, R^{x} und n die in Anspruch 1 genannten Bedeutungen haben, mit einem Trihalogen-s-triazin, der allgemeinen Formel (56) 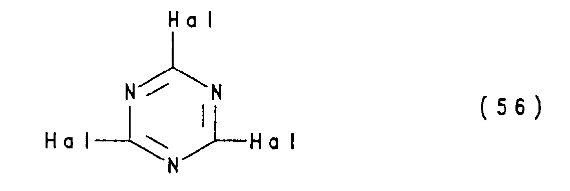 in welcher Hal für ein Halogenatom, wie insbesondere Chlor- oder Fluoratom, steht mit Cyanamid oder einem Alkalimetallsalz davon und mit einem Amin der allgemeinen Formel H-Q mit Q der in Anspruch 1 genannten Bedeutung in stöchiometrischen Mengen in beliebiger Reihenfolge miteinander umsetzt und gegebenenfalls anschließend weitere, dem Fachmann geläufige, erforderliche Umwandlungsreaktionen durchführt.

10. Verfahren nach Anspruch 9 zur Herstellung eines Azofarbstoffes von Anspruch 1, dadurch gekennzeichnet, daß man als Vorprodukt eine Diazoniumverbindung, die eine faserreaktive Gruppe der allgemeinen Formel (3) oder (5) besitzt, mit einer kupplungsfähigen Verbindung als Vorprodukt, die eine faserreaktive Gruppe der Formel (5) bzw. (3) besitzt, kuppelt.

11. Verfahren nach Anspruch 9, dadurch gekennzeichnet, daß man eine Verbindung der allgemeinen Formel (58) 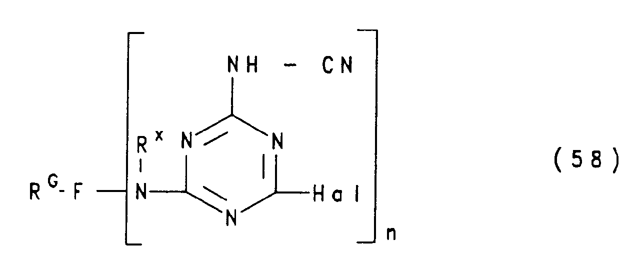 in welcher R^{G}, F, R^{x} und Hal die in Anspruch 9 genannten Bedeutungen haben, mit einem Amin der allgemeinen Formel H-Q mit Q der in Anspruch 9 genannten Bedeutung umsetzt,
oder daß man eine Verbindung der allgemeinen Formel (59) 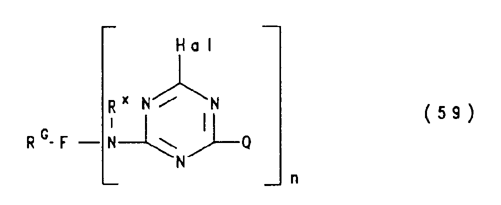 in welcher R^{G}, F, R^{x}, Hal, Q und n die in Anspruch 9 genannten Bedeutungen haben, mit Cyanamid oder einem Alkalimetallsalz davon umsetzt,
oder daß man eine Verbindung der allgemeinen Formel (55) mit einer Verbindung der allgemeinen Formel (60) 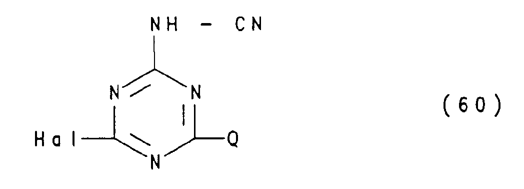 mit Hal und Q der in Anspruch 9 genannten Bedeutung umsetzt.

12. Verwendung eines Farbstoffes von mindestens einem der Ansprüche 1 bis 8 oder eines nach Anspruch 9 hergestellten Farbstoffes zum Färben und Bedrucken von hydroxy- und/oder carbonamidgruppenhaltigem Material, insbesondere Fasermaterial.

13. Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß der Farbstoff ein Farbstoff von mindestens einem der Ansprüche 1 bis 8 oder ein nach Anspruch 9 hergestellter Farbstoff ist.

## Claims

1. A dye corresponding to the formula (1) 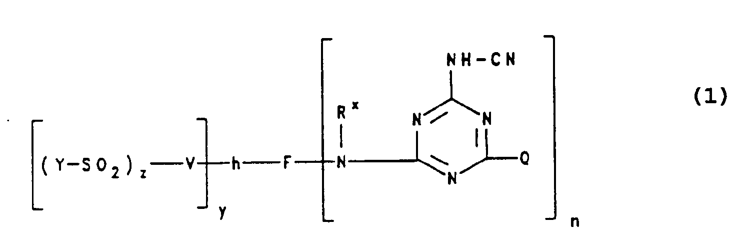 in which
F is the radical of a monoazo, disazo or polyazo dye or of a heavy metal complex azo dye derived therefrom or of an anthraquinone, phthalocyanine, formazan, azomethine, dioxazine, phenazine, stilbene, triphenylmethane, xanthene, thioxanthene, nitroaryl, naphthoquinone, pyrenequinone or perylenetetracarbimide dye;
R^{x} is a hydrogen atom or an alkyl group of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably a methyl or ethyl group and in particular a hydrogen atom;
n is the number 1 or 2, preferably 1;
Q is a group of the formula (2) 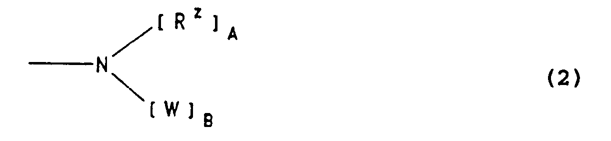
in which
R^{z} is a hydrogen atom or an alkyl group of 1 to 4 carbon atoms, which can be substituted by halogen, hydroxyl, cyano, alkoxy of 1 to 4 carbon atoms, carboxyl, sulfamoyl, sulfo or sulfato or by a phenyl radical which is unsubstituted or substituted by substituents from the group comprising halogen, alkoxy of 1 to 4 carbon atoms, alkyl of 1 to 4 carbon atoms, sulfo and carboxyl, or is a cyclohexyl radical or a phenyl radical which is unsubstituted or substituted by substituents from the group comprising halogen, alkoxy of 1 to 4 carbon atoms, alkyl of 1 to 4 carbon atoms, sulfo and carboxyl,
W is an aryl, alkylenearyl, arylenealkyl, alkylenearylenealkyl or arylenealkylenearyl radical substituted by 1 to 4 water-solubilizing substituents, the alkylene radicals or alkyl radicals being those having 1 to 8 carbon atoms and which can additionally be substituted by other substituents and the arylene radicals and aryl radicals being phenylene or naphthylene radicals and phenyl or naphthyl radicals which are unsubstituted or additionally substituted by other substituents, it being possible for the alkylene radicals to be interrupted by 1 or more hetero groups, such as -NH-, -N(R)- where R is alkyl of 1 to 4 carbon atoms, which can be substituted by sulfo, carboxyl, sulfato, phenyl or sulfophenyl, -O-, -S-, -SO₂-, -CO-, -SO₂-NH-, -NH-SO₂-, -NH-CO- and -CO-NH-, and it being possible for the alkylene and arylene moieties and alkyl and aryl moieties in the combined alkyl(ene)/aryl(ene) radicals to be separated from one another in each case by such a group,
A is the number zero or 1, and
B is the number 1 or 2,
the sum of (A + B) being the number 2, it being possible for the groups of the formula -W-(SO₂-Y)_{z}, in the case where B is 2, to have meanings which are identical to or different from one another;
V is a direct bond or an alkylene group or is a substituted or unsubstituted arylene radical or an alkylenearylene or arylenealkylene or alkylenearylenealkylene or arylenealkylenearylene radical, or an arylenearylene radical which is interrupted by one of the hetero groups listed below, the alkylene radicals being those having 1 to 8 carbon atoms and which can be substituted, and the arylene radicals being substituted or unsubstituted phenylene or naphthylene radicals, it being possible for the alkylene radicals to be interrupted by 1 or more hetero groups, such as -NH-, -N(R)- where R is alkyl of 1 to 4 carbon atoms, which can be substituted by sulfo, carboxyl, sulfato, phenyl or sulfophenyl, -O-, -S-, -SO₂ -, -CO-, -SO₂-NH-, -NH-SO₂-, -NH-CO- and -CO-NH-, and it being possible for the alkylene and arylene moieties in the combined alkylene/arylene radicals to be separated from one another in each case by such a hetero group;
y is the number 1 or 2;
z is the number 1 or 2;
h is a nitrogen atom in the case where y is 2 or a group of the formula -NH-, -N(R)- where R has one of the abovementioned meanings, -NH-CO-NH-, -NH-CO- or -CO-NH- or a direct bond in the case where y is 1;
Y is a vinyl group or an ethyl group containing, in the β position, a substituent which can be eliminated by alkali, and the group(s) -SO₂-Y are bound directly to an aromatic carbon atom of F or V or via an alkylene radical of 1 to 4 carbon atoms, or via an alkylamino group of 1 to 4 carbon atoms.

2. A dye as claimed in claim 1 of the formula 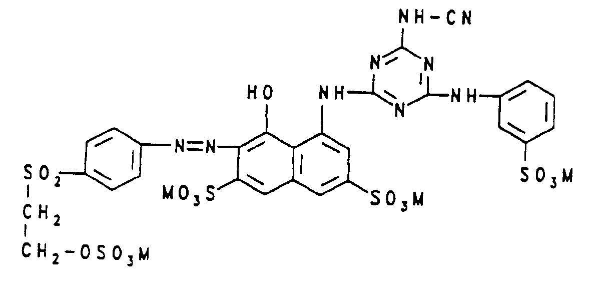 in which M is hydrogen or an alkali metal.

3. A dye as claimed in claim 1 of the formula 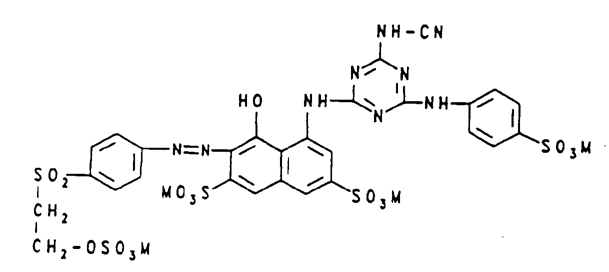 in which M is hydrogen or an alkali metal.

4. A dye as claimed in claim 1 of the formula (12B) 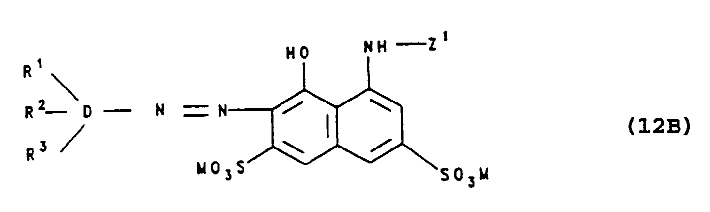 in which the radical R¹R²R³D- is a 1-sulfo-6-(β-sulfatoethylsulfonyl)naphth-2-yl radical, Z¹ is a 2-cyanamido-4-(3′-sulfophenyl)amino-1,3,5-triazin-6-yl or a 2-cyanamido-4-(4′-sulfophenyl)amino-1,3,5-triazin-6-yl group and M is hydrogen or an alkali metal.

5. A dye as claimed in claim 1 of the formula (12A) 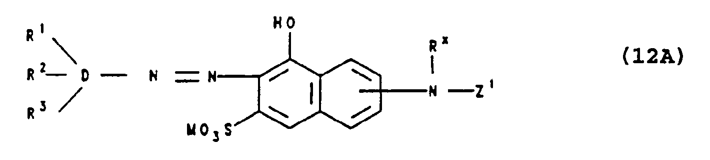 in which the radical R¹R²R³D- is a sulfo-6-(β-sulfatoethylsulfonyl)naphth-2-yl radical, R^{x} is hydrogen, the group -N(R^{x})-Z¹ is bound in the 3 position of the 8-naphthol radical, Z¹ is a 2-cyanamido-4-(3′-sulfophenyl)amino-1,3,5-triazin-6-yl or a 2-cyanamido-4-(4′-sulfophenyl)amino-1,3,5-triazin-6-yl group and M is hydrogen or an alkali metal.

6. A dye as claimed in claim 1 of the formula (12A) 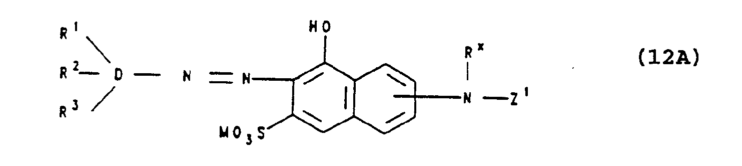 in which the radical R¹R²R³D- is a 4-(β-sulfatoethylsulfonyl)phenyl radical, R^{x} is hydrogen, the group -N(R^{x})-Z¹ is bound in the 3 position of the 8-naphthol radical, Z¹ is a 2-cyanamido-4-(3′-sulfophenyl)amino-1,3,5-triazin-6-yl or a 2-cyanamido-4-(4′-sulfophenyl)amino-1,3,5-triazin-6-yl group and M is hydrogen or an alkali metal.

7. A dye as claimed in claim 1 of the formula (12V) 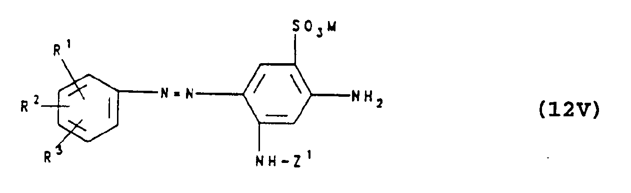 in which R¹ is bound to the benzene ring in the para position relative to the azo group and is a β-sulfatoethylsulfonyl group, R² and R³ are both a hydrogen atom, Z¹ is a 2-cyanamido-4-(3′-sulfophenyl)-amino-1,3,5-triazin-6-yl or a 2-cyanamido-4-(4′-sulfophenyl)amino-1,3,5-triazin-6-yl group and M is hydrogen or an alkali metal.

8. A dye as claimed in claim 1 of the formula (12L) 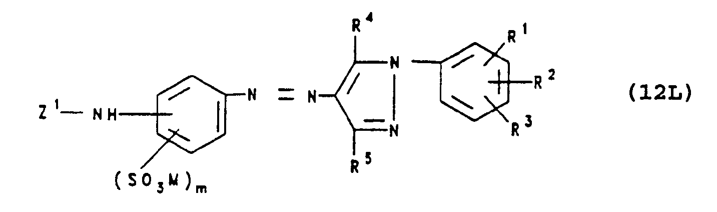 in which R⁴ is hydroxyl, R⁵ is methyl, R¹ is β-sulfatoethylsulfonyl and bound to the benzene ring in the para position relative to the nitrogen atom of the pyrazole radical, R² and R³ are both hydrogen, Z¹ is a 2-cyanamido-4-(3′-sulfophenyl)amino-1,3,5-triazin-6-yl or a 2-cyanamido-4-(4′-sulfophenyl)amino-1,3,5-triazin-6-yl group and M is hydrogen or an alkali metal, m is the number 1, and the group -SO₃M is bound to the benzene ring in the ortho position relative to the azo group, and the group Z¹NH- is bound to the benzene ring in the meta position relative to the azo group and in the para position relative to the sulfo group.

9. A process for the preparation of a dye of the formula (1) of claim 1, which comprises reacting precursors typical of the particular dye of the radical F, at least one of which contains a group of the formula (3) and at least one of which contains a group of the formula (5), with one another, or reacting an amino-containing starting compound of the formula (55) 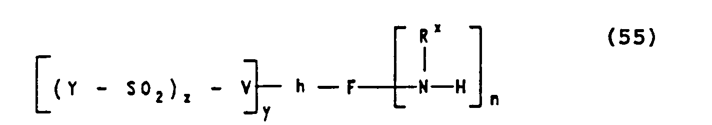 in which F, R^{x} and n have the meanings given in claim 1, with a trihalo-s-triazine of the formula (56) 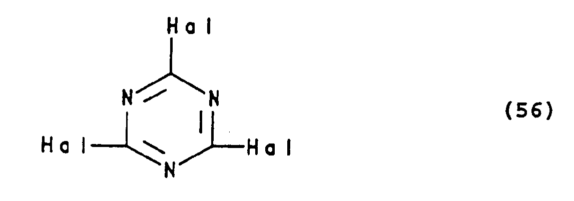 in which Hal is a halogen atom, such as, in particular, a chlorine or fluorine atom, with cyanamide or an alkali metal salt thereof and with an amine of the formula H-Q where Q has the meaning given in claim 1 in stoichiometric amounts in any desired order, and then carrying out, if desired, further necessary conversion reactions known to one skilled in the art.

10. The process as claimed in claim 9 for the preparation of an azo dye of claim 1, wherein a diazonium compound containing a fiber-reactive group of the formula (3) or (5) is coupled as the precursor onto a couplable compound containing a fiber-reactive group of the formula (5) or (3) as the precursor.

11. The process as claimed in claim 9, wherein a compound of the formula (58) 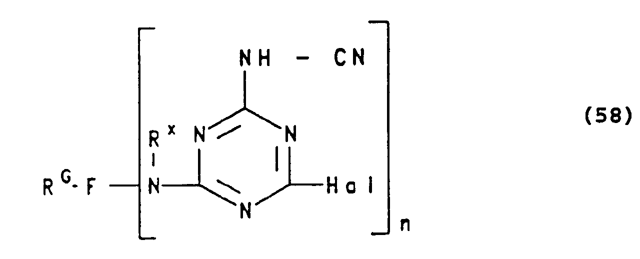 in which R^{G}, F, R^{x} and Hal have the meanings given in claim 9, is reacted with an amine of the formula H-Q where Q has the meaning given in claim 9,
or wherein a compound of the formula (59) 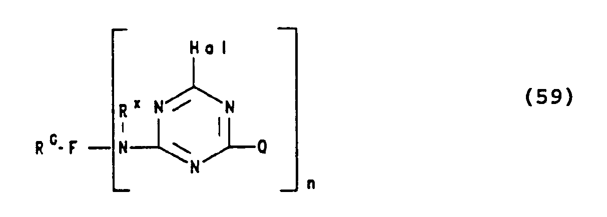 in which R^{G}, F, R^{x}, Hal, Q and n have the meanings given in claim 9, is reacted with cyanamide or an alkali metal salt thereof,
or wherein a compound of the formula (55) is reacted with a compound of the formula (60) 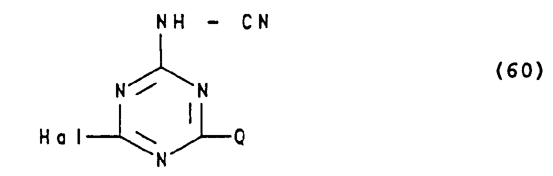 where Hal and Q have the meaning given in claim 9.

12. Use of a dye as claimed in at least one of claims 1 to 8 or of a dye prepared as claimed in claim 9 for the dyeing and printing of hydroxyl- and/or carboxamido-containing material, in particular fiber material.

13. A process for the dyeing and printing of hydroxyl- and/or carboxamido-containing material, preferably fiber material, in which a dye is applied to the material and the dye is fixed on the material by means of heat or by means of an alkaline agent or by means of heat and by means of an alkaline agent, wherein the dye is a dye as claimed in at least one of claims 1 to 8 or a dye prepared as claimed in claim 9.

## Revendications

1. Colorants correspondant à la formule générale (1) 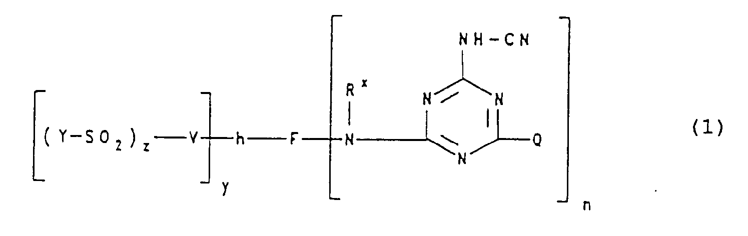 dans laquelle les radicaux ont les significations suivantes :
F est un radical d'un colorant monoazoïque, disazoïque ou polyazoïque, ou d'un complexe de métal lourd-colorant azoïque dérivé de ce radical, ou d'un colorant de l'anthraquinone, de la phtalocyanine, du formazane, de l'azométhine, de la dioxazine, de la phénazine, du stilbène, du triphénylméthane, du xanthène, du thioxanthène, du nitroaryle, de la naphtoquinone, de la pyrènequinone ou du pérylènetétracarbimide ;
R^{x} est un atome d'hydrogène ou un groupe alkyle comportant de 1 à 4 atomes de carbone, qui peut être substitué par un halogène, un hydroxy, un cyano, un alcoxy comportant de 1 à 4 atomes de carbone, un alcoxycarbonyle comportant de 2 à 5 atomes de carbone, un carboxy, un sulfamoyle, un sulfo ou un sulfato, de préférence le groupe méthyle ou éthyle, et plus particulièrement un atome d'hydrogène ;
n est le nombre 1 ou 2, de préférence 1 ;
Q est un groupe de formule générale (2) 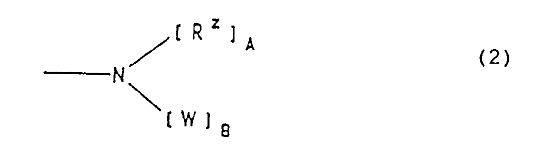
dans laquelle
R^{z} est un atome d'hydrogène ou un groupe alkyle comportant de 1 à 4 atomes de carbone, qui peut être substitué par un halogène, un hydroxy, un cyano, un alcoxy comportant de 1 à 4 atomes de carbone, un carboxy, un sulfamoyle, un sulfo ou un sulfato ou par un radical phényle éventuellement substitué par des substituants pris dans le groupe d'un halogène, d'un alcoxy comportant de 1 à 4 atomes de carbone, d'un alkyle comportant de 1 à 4 atomes de carbone, d'un sulfo et d'un carboxy, ou est un radical cyclohexyle ou un radical phényle éventuellement substitué par des substituants pris dans le groupe d'un halogène, d'un alcoxy comportant de 1 à 4 atomes de carbone, d'un alkyle comportant de 1 à 4 atomes de carbone, d'un sulfo et d'un carboxy,
W est un radical arylène-alkylène-aryle, alkylène-arylène-alkyle, arylène-alkyle, alkylène-aryle ou aryle substitué par 1 à 4 substituants hydrosolubilisants, où les radicaux alkylène et alkyle sont des radicaux comportant de 1 à 8 atomes de carbone et peuvent être substitués encore par d'autres substituants et les radicaux arylène et aryle sont des radicaux phényl ou naphtyle ou phénylène ou naphtylène,éventuellement substitués par d'autres substituants encore, et les radicaux alkylène pouvant être interrompus par un ou plusieurs groupes hétéro comme les groupes -NH-, -N(R)-, R étant un alkyle comportant de 1 à 4 atomes de carbone, pouvant lui-même être substitué par un groupe sulfo, carboxy, sulfato, phényle ou sulfophényle, -O-, -S-, -SO₂-, -CO-, -SO₂-NH-, -NH-SO₂-, -NH-CO- et -CO-NH-, et les composants alkylène et arylène ou encore alkyle et aryle dans les radicaux combinés alkyl(ène)/aryl(ène) pouvant être chaque fois séparés l'un de l'autre par un de ces groupes,
A signifie le nombre 0 ou 1 et
B signifie le nombre 1 ou 2,
la somme de (A + B) étant égale au nombre 2 et dans le cas de B étant égal à 2, les groupes de formule -W-(SO₂-Y)_{z} peuvent avoir la même signification l'un par rapport à l'autre ou une signification différente l'un de l'autre ;
V est une liaison directe ou un groupe alkylène ou un radical arylène-alkylène-arylène ou alkylènearylène-alkylène ou arylène-alkylène ou alkylènearylène ou arylène éventuellement substitué ou un radical arylène-arylène interrompu par l'un des groupes hétéro cités plus loin où les radicaux alkylène sont ceux qui comportent de 1 à 8 atomes de carbone et qui peuvent être substitués et les radicaux arylène sont éventuellement des radicaux naphtylène ou phénylène substitués, et les radicaux alkylène pouvant être interrompus par 1 ou plusieurs groupes hétéro, comme les groupes -NH-, -N(R)-, R étant un alkyle comportant de 1 à 4 atomes de carbone, pouvant lui-même être substitué par un groupe sulfo, carboxy, sulfato, phényle ou sulfophényle, -O-, -S-, -SO₂-, -CO-, -SO₂-NH-, -NH-SO₂-, -NH-CO- et -CO-NH-, et les composants alkylène et arylène dans les radicaux combinés alkylène/arylène pouvant être chaque fois séparés l'un de l'autre par un de ces groupes hétéro ;
y est le nombre 1 ou 2 ;
z est le nombre 1 ou 2 ;
h est, dans le cas de y = 2, un atome de N ou dans le cas de y = 1 un groupe de formule -NH-, -N(R)-, R ayant l'une des significations données ci-dessus, -NH-CO-NH-, -NH-CO- ou -CO-NH- ou est une liaison directe,
Y est le groupe vinyle ou est un groupe éthyle qui contient en position β un substituant éliminable en milieu alcalin, le ou les groupe(s) -SO₂-Y pouvant être lié(s) directement ou par l'intermédiaire d'un radical alkyle comportant de 1 à 4 atomes de carbone ou par l'intermédiaire d'un groupe alkylamino comportant de 1 à 4 atomes de carbone à un atome de carbone aromatique de F ou de V.

2. Colorant selon la revendication 1 de formule : 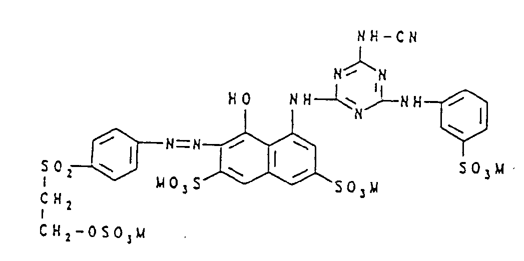 dans laquelle M est l'hydrogène ou un métal alcalin.

3. Colorant selon la revendication 1 de formule : 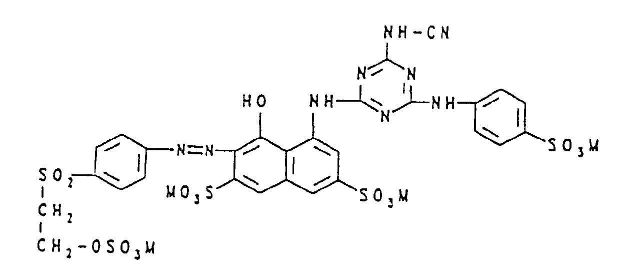 dans laquelle M est l'hydrogène ou un métal alcalin.

4. Colorant selon la revendication 1 de formule générale (12B) : 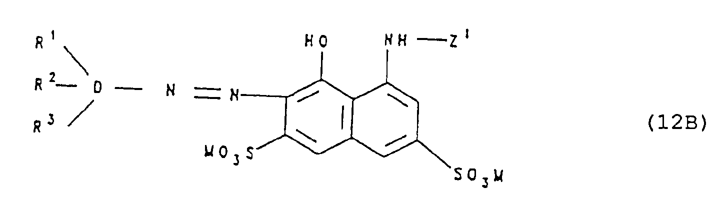 dans laquelle le radical R¹R²R³D- est le radical 1-sulfo-6-(β-sulfato-éthylsulfonyl)-napht-2-yle, Z¹ signifie le groupe 2-cyanamido-4-(3′-sulfophényl)-amino-1,3,5-triazin-6-yle ou le groupe 2-cyanamido-4-(4′-sulfophényl)-amino-1,3,5-triazin-6-yle et M est l'hydrogène ou un métal alcalin.

5. Colorant selon la revendication 1 de formule générale (12A) : 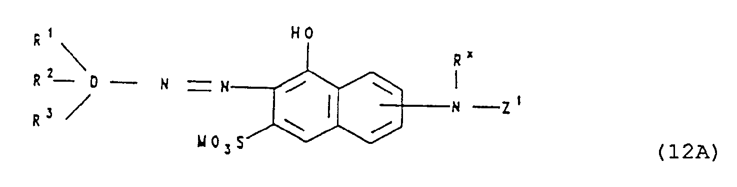 dans laquelle le radical R¹R²R³D- est le radical 1-sulfo-6-(β-sulfato-éthylsulfonyl)-napht-2-yle, R^{x} est l'hydrogène, le groupe -N(R^{X})-Z¹ est lié au radical 8-naphtol en position 3, Z¹ signifie le groupe 2-cyanamido-4-(3′-sulfophényl)-amino-1,3,5-triazin-6-yle ou le groupe 2-cyanamido-4-(4′-sulfophényl)-amino-1,3,5-triazin-6-yle et M est l'hydrogène ou un métal alcalin.

6. Colorant selon la revendication 1 de formule générale (12A) : 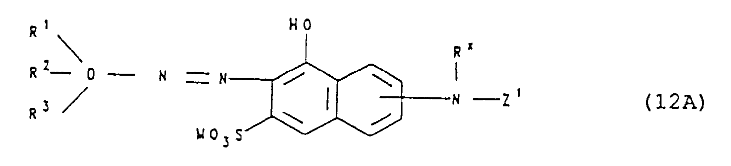 dans laquelle le radical R¹R²R³D- est le radical 4-(β-sulfato-éthylsulfonyl)-phényle, R^{x} est l'hydrogène, le groupe -N(R^{X})-Z¹ est lié au radical 8-naphtol en position 3, Z¹ signifie le groupe 2-cyanamido-4-(3′-sulfophényl)-amino-1,3,5-triazin-6-yle ou le groupe 2-cyanamido-4-(4′-sulfophényl)-amino-1,3,5-triazin-6-yle et M est l'hydrogène ou un métal alcalin.

7. Colorant selon la revendication 1 de formule générale (12V) : 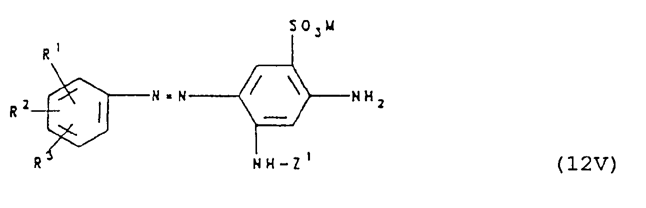 dans laquelle R¹ est lié au noyau de benzène en position para par rapport au groupe azoïque et signifie le groupe β-sulfato-éthylsulfonyle, R² et R³ représentent tous les deux un atome d'hydrogène, Z¹ signifie le groupe 2-cyanamido-4-(3′-sulfophényl)-amino-1,3,5-triazin-6-yle ou le groupe 2-cyanamido-4-(4′-sulfophényl)-amino-1,3,5-triazin-6-yle et M est l'hydrogène ou un métal alcalin.

8. Colorant selon la revendication 1 de formule générale (12L) : 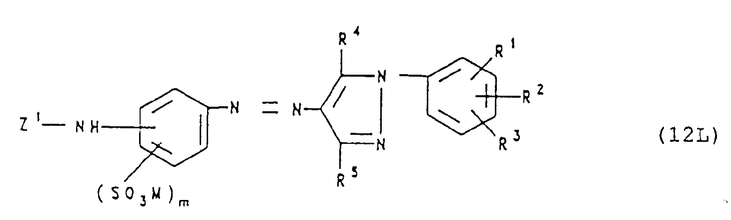 dans laquelle R⁴ est un hydroxy, R⁵ est un méthyle, R¹ est le β-sulfato-éthylsulfonyle et est lié au noyau de benzène en position para par rapport à l'atome N du radical pyrazole, R² et R³ représentent tous les deux l'hydrogène, Z¹ signifie le groupe 2-cyanamido-4-(3′-sulfophényl)-amino-1,3,5-triazin-6-yle ou le groupe 2-cyanamido-4-(4′-sulfophényl)-amino-1,3,5-triazin-6-yle et M est l'hydrogène ou un métal alcalin, m est le nombre 1 et le groupe -SO₃M est lié au noyau de benzène en position ortho par rapport au groupe azoïque et le groupe Z¹NH est lié au noyau de benzène en position méta par rapport au groupe azoïque et en position para par rapport au groupe sulfo.

9. Procédé pour la préparation d'un colorant de formule générale (1) de la revendication 1, caractérisé en ce qu'on fait réagir l'un avec l'autre, des précurseurs typiques pour chaque colorant du radical F, dont au moins un contient un groupe de formule générale (3) et au moins un contient un groupe de formule générale (5), ou on fait réagir l'un avec l'autre des composés de départ contenant des groupes amino de formule générale (55) : 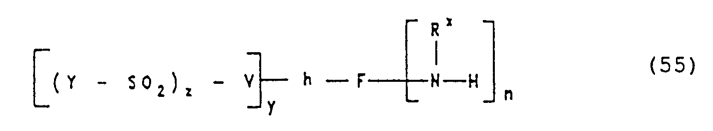 dans laquelle F, R^{x} et n ont les significations données dans la revendication 1, avec une trihalogéno-s-triazine de formule générale (56) : 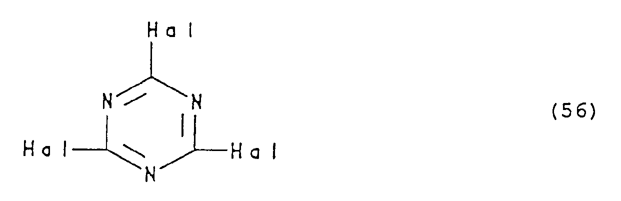 dans laquelle Hal représente un atome d'halogène, comme plus particulièrement un atome de chlore ou de fluor, avec un cyanamide ou un de ses sels de métaux alcalins et avec une amine de formule générale H-Q avec Q ayant la signification donnée dans la revendication 1, en quantités stoechiométriques, en ordre quelconque, et en effectuant éventuellement par la suite d'autres réactions de transformation nécessaires couramment connues du spécialiste.

10. Procédé selon la revendication 9 pour la préparation d'un colorant azoïque de la revendication 1, caractérisé en ce qu'on copule en tant que précurseur un composé de diazonium qui contient un groupe réactif vis-à-vis des fibres de formules générales (3) ou (5), avec un composé apte à la copulation en tant que précurseur, qui contient un groupe réactif vis-à-vis des fibres de formules (5) ou (3).

11. Procédé selon la revendication 9, caractérisé en ce qu'on fait réagir un composé de formule générale (58) : 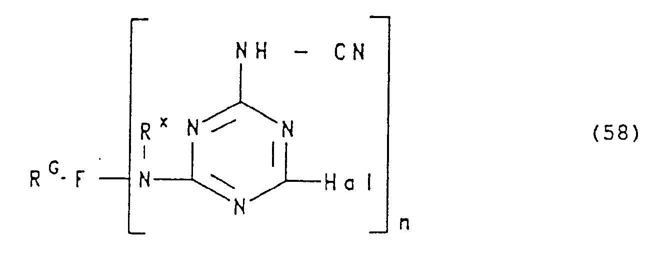 dans laquelle R^{G}, F, R^{x} et Hal ont les significations données dans la revendication 9, avec une amine de formule générale H-Q avec Q ayant la significaticn donnée dans la revendication 9, ou en ce qu'on fait réagir un composé de formule générale (59) : 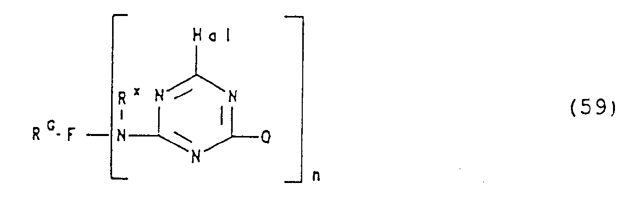 dans laquelle R^{G}, F, R^{x}, Hal, Q et n ont les significations données dans la revendication 9, avec un cyanamide ou avec un de ses sels de métaux alcalins, ou en faisant réagir un composé de formule générale (55) avec un composé de formule générale (60) : 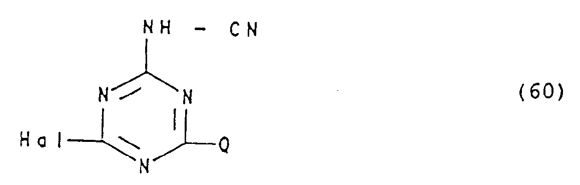 avec Hal et Q ayant la signification donnée dans la revendication 9.

12. Utilisation d'un colorant d'au moins de l'une des revendications 1 à 8 ou d'un colorant préparé selon la revendication 9 pour la teinture et l'impression de matières contenant des groupes hydroxy et/ou carboxamido, plus particulièrement des matières fibreuses.

13. Procédé pour la teinture et l'impression de matières contenant des groupes hydroxy et/ou carboxamido, de préférence des matières fibreuses selon lequel on dépose sur la matière un colorant et on fixe le colorant sur la matière au moyen de la chaleur ou d'un agent à action alcaline ou au moyen de la chaleur et d'un agent à action alcaline, caractérisé en ce que le colorant est un colorant selon au moins une des revendications 1 à 8 ou est un colorant préparé selon la revendication 9.
